(19) **Europäisches Patentamt / European Patent Office / Office européen des brevets**

(11) **EP 2 440 014 A1**

(12) **EUROPEAN PATENT APPLICATION**
published in accordance with Art. 153(4) EPC

(43) Date of publication:
**11.04.2012 Bulletin 2012/15**

(51) Int Cl.:
**H05B 6/68** (2006.01)

(21) Application number: **10783130.7**

(22) Date of filing: **31.05.2010**

(86) International application number:
**PCT/JP2010/003645**

(87) International publication number:
**WO 2010/140342 (09.12.2010 Gazette 2010/49)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **01.06.2009 JP 2009131733**

(71) Applicant: **Panasonic Corporation**
**Kadoma-shi**
**Osaka 571-8501 (JP)**

(72) Inventors:
• **OKAJIMA, Toshiyuki**
**Osaka 540-6207 (JP)**
• **ISHIZAKI, Toshio**
**Osaka 540-6207 (JP)**

(74) Representative: **Kügele, Bernhard et al**
**Novagraaf International SA**
**Chemin de l'Echo 3**
**1213 Onex (CH)**

(54) **HIGH-FREQUENCY HEATING DEVICE AND HIGH-FREQUENCY HEATING METHOD**

(57) A radio-frequency heating apparatus according to an aspect of the present invention includes: radio-frequency power generation devices (101a, 101b, 101c) that radiate radio-frequency power at frequencies; and a control unit (150) that sets, for the radio-frequency power generation devices (101a, 101b, 101c), a combination of frequencies of the radio-frequency power to be radiated from the radio-frequency power generation devices (101a, 101b, 101c), and reverse flow power detection units (108a, 108b, 108c) in the respective radio-frequency power generation devices (101a, 101b, 101c) detect reflected power and through power separately, and the control unit (150) determines, based on phase and amplitude of the detected reflected power and through power, the combination of frequencies of the radio-frequency power to be generated by the radio-frequency power generation devices (101a, 101b, 101c) to heat an object.

FIG. 1

EP 2 440 014 A1

**Description**

[Technical Field]

[[Background Art]

The present invention relates to a radio-frequency heating apparatus which includes a plurality of radio-frequency power generation devices each having a radio-frequency power generation unit that is constructed as a semiconductor device, and to a radio-frequency heating method.

In conventional radio-frequency heating apparatuses, radio-frequency power generation units typically include vacuum tubes called magnetrons.

In recent years, development of radio-frequency heating apparatuses using semiconductor devices such as gallium nitride (GaN) instead of the magnetrons has proceeded. Such radio-frequency heating apparatuses can be small in size and low in cost and are capable of controlling frequencies with ease. Patent Literature 1 discloses a technique of heating an object in a preferred state by controlling phase differences and frequencies of radio-frequency power radiated from a plurality of radiation units so that reverse flow power is smallest.

[Citation List]

[Patent Literature]

[Patent Literature 1]

Japanese Unexamined Patent Application Publication No. 2008-269793

[Summary of Invention]

[Technical Problem]

However, with the above conventional structure, it is necessary to change, in respective set ranges, conditions for radio-frequency power that is required to be optimized, to detect the reverse flow power under all the combinations of the conditions, with the result that it takes time to determine the optimum heating condition after a user places an object in a heating chamber and presses a start button.

An object of the present invention is to provide a radio-frequency heating apparatus which solves the above conventional problem and is capable of improving radiation efficiency of radio-frequency power and shortening the length of time to determine the optimum heating condition. Furthermore, another object of the present invention is to provide a radio-frequency heating method in which the radiation efficiency of radio-frequency power is improved and the length of time to determine the optimum heating condition can be shortened.

[Solution to Problem]

In order to solve the above conventional problem, a radio-frequency heating apparatus according to an aspect of the present invention includes: a heating chamber in which an object to be heated is placed; a plurality of radio-frequency power generation devices from which radio-frequency power is radiated into the heating chamber; and a control unit configured to control the radio-frequency power generation devices, wherein each of the radio-frequency power generation devices includes: a radio-frequency power generation unit configured to generate radio-frequency power at a frequency that is set by the control unit; a radiation unit configured to radiate, into the heating chamber, the radio-frequency power generated by the radio-frequency power generation unit; and a reverse flow power detection unit configured to detect reverse flow power entering from the heating chamber into the radiation unit, the reverse flow power detection unit is configured to separately detect reflected reverse flow power and pass-through reverse flow power based on the frequency of the radio-frequency power generation unit set by the control unit, the reflected reverse flow power being part of the radio-frequency power radiated from the radiation unit of one of the radio-frequency power generation devices which is reflected back into the radiation unit of the one of the radio-frequency power generation devices, and the pass-through reverse flow power being part of the radio-frequency power radiated from the radiation unit of another one of the radio-frequency power generation devices which enters the one of the radio-frequency power generation devices, the control unit is configured to sequentially set a plurality of combinations of frequencies for the radio-frequency power generation units, and determine, based on amplitude and phase of the reflected reverse flow power and amplitude and phase of the pass-through reverse flow power detected for each of the set combinations of frequencies, one of the combinations of frequencies to be set for the radio-frequency power generation units in the respective radio-frequency power generation devices to heat the object, and the radio-frequency power generation devices are configured to heat the object by radiating the radio-frequency power at the determined frequencies into the heating chamber.

With this, the combination of frequencies to be generated by the radio-frequency power generation units so as to obtain good radiation efficiency can be determined in a very short time.

In a preferred embodiment, the control unit may be further configured to (i) sequentially set part of combinations among all the combinations of frequencies settable for the radio-frequency power generation units in the respective radio-frequency power generation devices, (ii) calculate the amplitude and phase of the reflected reverse flow power and the amplitude and phase of the pass-through reverse flow power detected by the reverse flow power detection units for each of the set part of combinations, and estimate, using a calculation result, amplitude and phase of the reflected reverse flow power and amplitude and phase of the pass-through reverse flow power to be detected by the reverse flow power detection unit for each of other combinations among all the combinations of settable frequencies when the other combinations are sequentially set, and (iii) determine, from a calculation result for each of the part of combinations and an estimation result for each of the other combinations, one of all the combinations as the combination of frequencies to be set for the radio-frequency power generation units to heat the object.

With this, measurement needs to be executed on not all the combinations of settable frequencies to be generated by the radio-frequency power generation units, but the radiation efficiency with all the combinations of the settable frequencies can be determined by calculation. Specifically, from the minimum number of measurement values, the radiation efficiency of the remaining combinations of settable frequencies can be estimated, so that the combination of frequencies which provide the optimum radiation efficiency can be determined in a short time. For example, in a short time, the control unit can determine, as a combination of frequencies for heating a object, a combination of frequencies at which the total amount of reflected reverse flow power and pass-through reverse flow power that are detected in the respective radio-frequency power generation devices is smallest among all the combinations of the settable frequencies.

In a preferred embodiment, it may further be possible that the reverse flow power detection unit includes a quadrature detection unit, the quadrature detection unit is configured to output, to the control unit, an in-phase detection signal and a quadrature detection signal obtained by performing, using the radio-frequency power generated by the radio-frequency power generation unit, quadrature detection on the reverse flow power that has entered the radiation unit, and the control unit is configured to calculate, using the in-phase detection signal and the quadrature detection signal, the amplitude and phase of the reflected reverse flow power and the amplitude and phase of the pass-through reverse flow power.

This allows the control unit to precisely calculate the amplitude and phase of the reflected reverse flow power and the amplitude and phase of the pass-through reverse flow power, both of which reverse flow power enters the respective radio-frequency power generation devices.

In a preferred embodiment, it may further be possible that each of the radio-frequency power generation devices further includes a radio-frequency power amplification unit configured to amplify the radio-frequency power generated by the radio-frequency power generation unit and provide variable gains, and the control unit is further configured to set an amplification gain for the radio-frequency power amplification unit.

In a preferred embodiment, it may further be possible that, when the reverse flow power detection unit in one of the radio-frequency power generation devices detects the pass-through reverse flow power radiated from another one of the radio-frequency power generation devices, the control unit is configured to (i) set the frequency of the radio-frequency power generation unit in the one of the radio-frequency power generation devices to be the same as the frequency of the radio-frequency power generation unit in the other one of the radio-frequency power generation devices, and (ii) set the amplification gains of the respective radio-frequency power amplification units such that the amplitude of the reflected reverse flow power in the one of the radio-frequency power generation devices is smaller than the amplitude of the pass-through reverse flow power radiated from the other one of the radio-frequency power generation devices.

In a preferred embodiment, when the reverse flow power detection unit in one of the radio-frequency power generation devices detects the reflected reverse flow power, the control unit may be further configured to set the amplification gains of the respective radio-frequency power amplification units such that the amplitude of the pass-through reverse flow power radiated from another one of the radio-frequency power generation devices is smaller than the amplitude of the reflected reverse flow power in the one of the radio-frequency power generation devices.

In a preferred embodiment, the control unit may be further configured to (i) perform at least one of the following: performing, as a pre-search process, determination of the combination of frequencies to be set for the radio-frequency power generation units in the respective radio-frequency power generation devices, before a heating process for the object to be heated; and performing, as a re-search process, the determination during the heating process for the object to be heated, and (ii) set the amplification gains of the radio-frequency power amplification units in the respective radio-frequency power generation devices during the pre-search process or the re-search process such that radio-frequency power to be radiated from the radiation unit of each of the radio-frequency power generation devices is smaller than the radio-frequency power that is radiated from the radiation unit during the heating process.

With this, the radio-frequency heating apparatus which the reverse flow power enters can be prevented from being broken, and especially the radio-frequency power amplification unit including a semiconductor device can be prevented from being broken.

In a preferred embodiment, the control unit may be further configured to perform, as a pre-search process, determination of the combination of frequencies to be set for the radio-frequency power generation units in the respective radio-frequency power generation devices, before a heating process for the object to be heated.

This allows an object to be heated under the optimum heating condition.

In a preferred embodiment, the control unit may be further configured to (i) perform, as a re-search process, determination of the combination of frequencies to be set for the radio-frequency power generation units in the respective radio-frequency power generation devices, during a heating process for the object to be heated, and (ii) set the radio-frequency power generation units in the respective radio-frequency power generation devices to have a new combination of frequencies determined in the re-search process.

With this, even when the object has its temperature, shape, or the like changed during the heating process, the object can always be heated under the optimum heating condition.

In a preferred embodiment, it may further be possible that the reverse flow power detection unit is configured to detect the reverse flow power during the heating process for the object to be heated, and the control unit is configured to perform the re-search process when the reverse flow power detected by at least one of the reverse flow power detection units in the respective radio-frequency power generation devices exceeds a predetermined threshold.

In a preferred embodiment, it may further be possible that one or more detective power generation units configured to generate detective radio-frequency power at set frequencies is provided, the control unit is further configured to set, for the respective detective power generation units, detective frequencies different from the frequencies that are set for the radio-frequency power generation units in the respective radio-frequency power generation devices, the reverse flow power detection unit includes a quadrature detection unit, the quadrature detection unit is configured to output, to the control unit, an in-phase detection signal and a quadrature detection signal obtained by performing, using the detective radio-frequency power generated by a corresponding one of the detective power generation units, quadrature detection on the reverse flow power that has entered the radiation unit, and the control unit is configured to calculate, using the in-phase detection signal and the quadrature detection signal, the amplitude and phase of the reflected reverse flow power and the amplitude and phase of the pass-through reverse flow power.

With this, the reflected reverse flow power and the pass-through reverse flow power can be detected with improved accuracy, with the result that an object can be heated under a more optimum condition.

In a preferred embodiment, each of the detective power generation units may be further provided in a corresponding one of the radio-frequency power generation devices.

A radio-frequency heating method according to an aspect of the present invention is a radio-frequency heating method of heating an object placed in a heating chamber using radio-frequency power radiated from a plurality of radio-frequency power generation devices, the radio-frequency heating method including: setting frequencies of the radio-frequency power radiated from the respective radio-frequency power generation devices; firstly detecting amplitude and phase of reflected reverse flow power and amplitude and phase of pass-through reverse flow power based on the frequencies that have been set for the respective radio-frequency power generation devices, the reflected reverse flow power being part of the radio-frequency power radiated from one of the radio-frequency power generation devices which is reflected back into the one of the radio-frequency power generation devices, and the pass-through reverse flow power being part of the radio-frequency power radiated from another one of the radio-frequency power generation devices which enters the one of the radio-frequency power generation devices, changing the frequencies of the radio-frequency power radiated from the respective radio-frequency power generation devices; secondly detecting amplitude and phase of the reflected reverse flow power and amplitude and phase of the pass-through reverse flow power based on the frequencies that have been set in the changing; determining, based on the amplitude and phase of the reflected reverse flow power and the amplitude and phase of the pass-through reverse flow power detected in the firstly detecting and the secondly detecting, a combination of the frequencies of the radio-frequency power to be radiated from the respective radio-frequency power generation devices to heat the object; and heating the object by radiating the radio-frequency power at the frequencies in the determined combination from the respective radio-frequency power generation devices.

In a preferred embodiment, it may further be possible that the determining includes: estimating, by calculation using the amplitude and phase of the reflected reverse flow power and the amplitude and phase of the pass-through reverse flow power detected in the firstly detecting and the secondly detecting, amplitude and phase of the reflected reverse flow power and amplitude and phase of the pass-through reverse flow power for each of all the combinations of settable frequencies of the radio-frequency power radiated from the respective radio-frequency power generation devices; and determining, from the amplitude and phase of the reflected reverse flow power and the amplitude and phase of the pass-through reverse flow power detected in the firstly detecting and the secondly detecting and the amplitude and phase of the reflected reverse flow power and the amplitude and phase of the pass-through reverse flow power estimated in the estimating, a combination of frequencies of the radio-frequency power to be radiated from the respective radio-frequency power generation devices to heat the object.

[Advantageous Effects of Invention]

The present invention can provide a radio-frequency heating apparatus and a radio-frequency heating method in which the radiation efficiency of radio-frequency power is improved and the length of time to determine the optimum heating condition can be shortened.

[Brief Description of Drawings]

[Fig. 1]

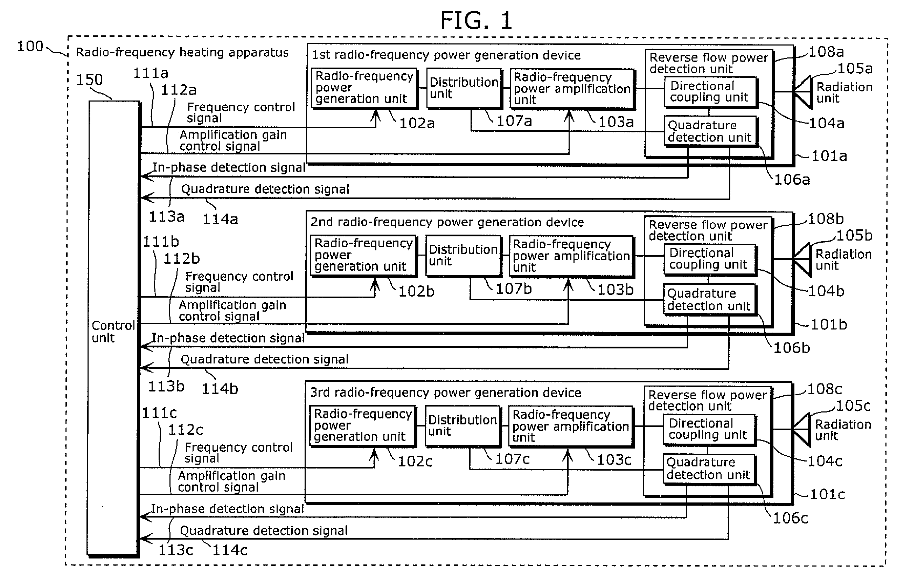

FIG. 1 is a block diagram showing a basic structure of a radio-frequency heating apparatus according to the first embodiment.
[Fig. 2]

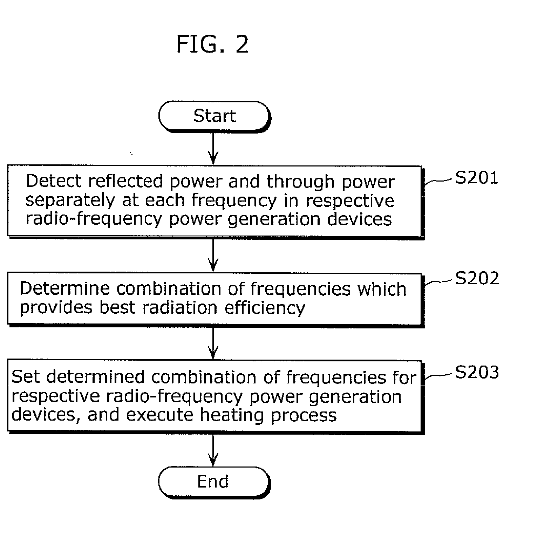

FIG. 2 is a flowchart showing a basic control procedure in the radio-frequency heating apparatus according to the first embodiment.
[Fig. 3]

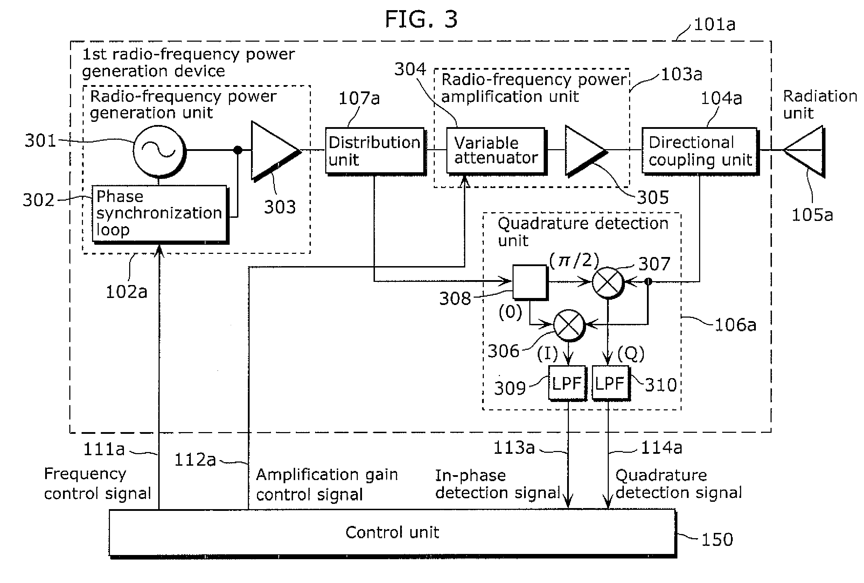

FIG. 3 is a block diagram showing a structure of a radio-frequency power generation device according to the first embodiment.
[Fig. 4]

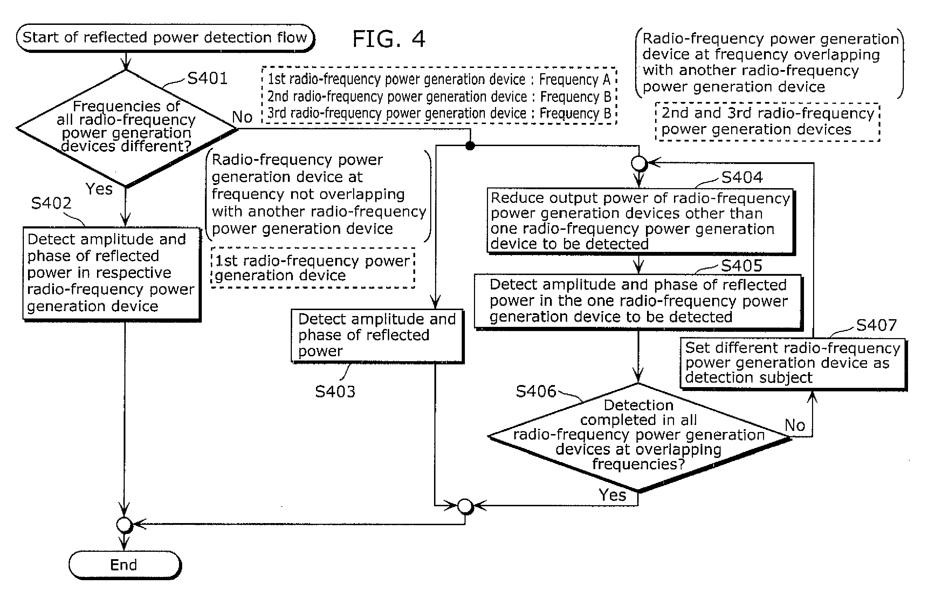

FIG. 4 is a flowchart showing a control procedure for detecting the reflected power in the radio-frequency heating apparatus according to the first embodiment.
[Fig. 5]

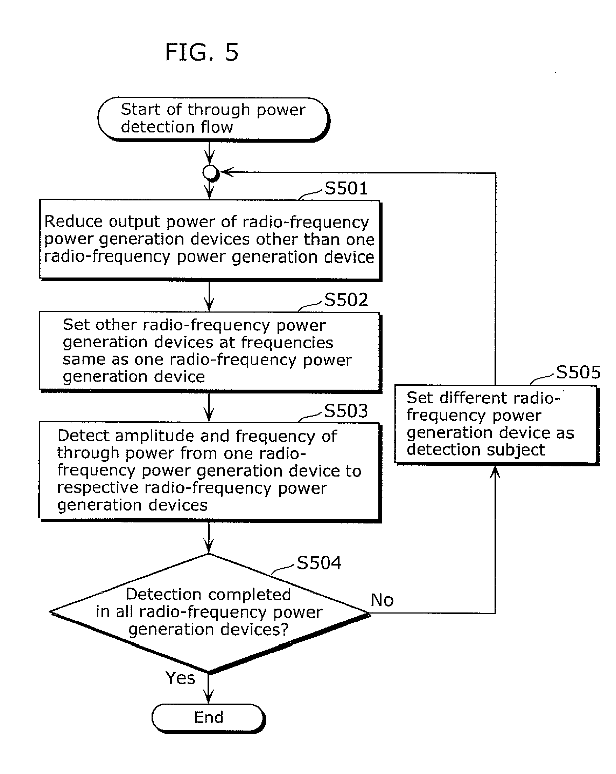

FIG. 5 is a flowchart showing the first control procedure for detecting the through power in the radio-frequency heating apparatus according to the first embodiment.
[Fig. 6]

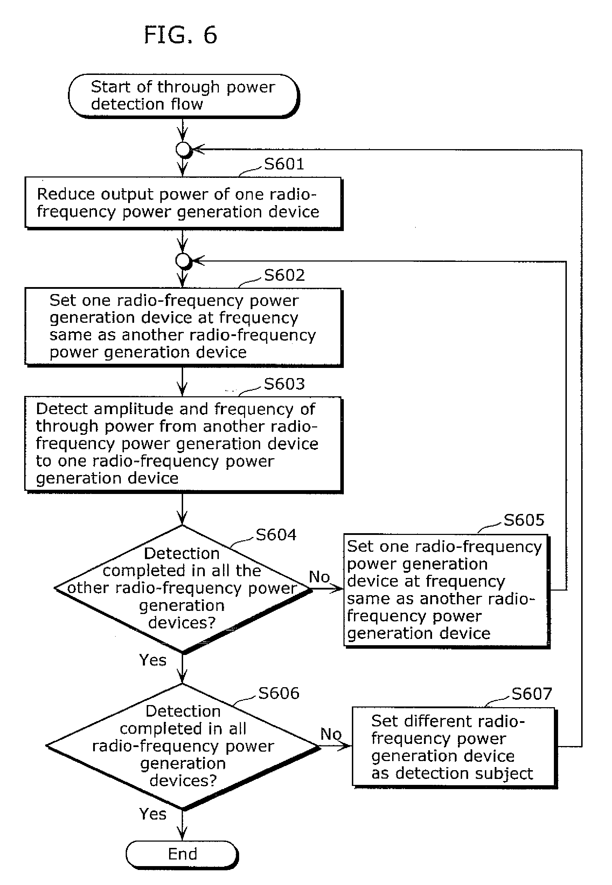

FIG. 6 is a flowchart showing the second control procedure for detecting the through power in the radio-frequency heating apparatus according to the first embodiment.
[Fig. 7]

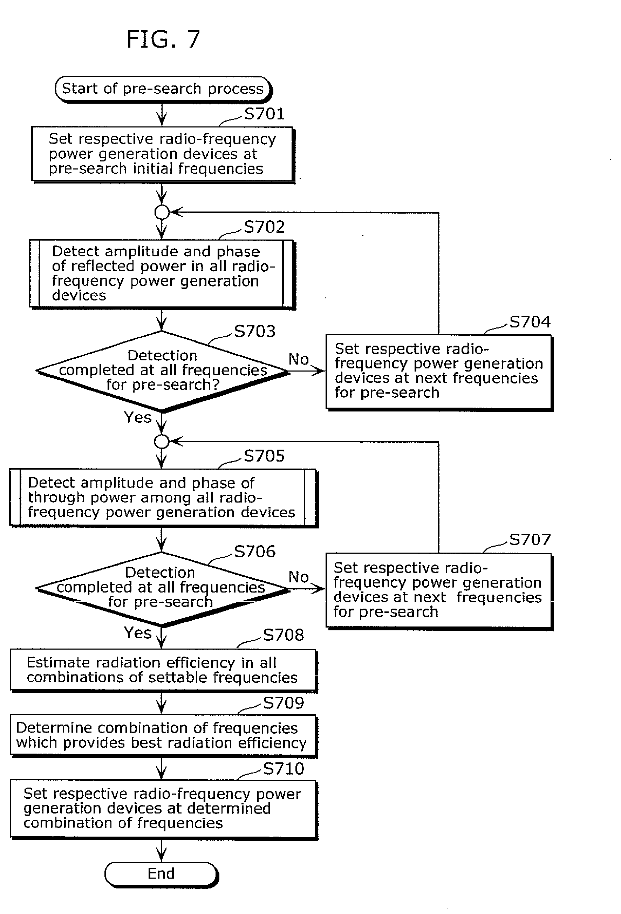

FIG. 7 is a flowchart showing a control procedure in a pre-search process of the radio-frequency heating apparatus according to the first embodiment.
[Fig. 8]

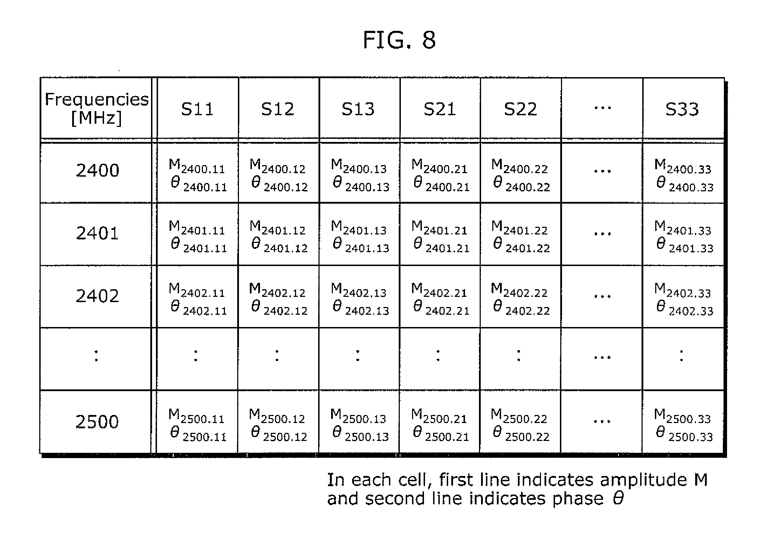

FIG. 8 is an example of a matrix which shows amplitude and phase of reflected power in respective radio-frequency power generation devices at respective frequencies, and amplitude and phase of the through power among the respective radio-frequency power generation devices at the respective frequencies.
[Fig. 9]

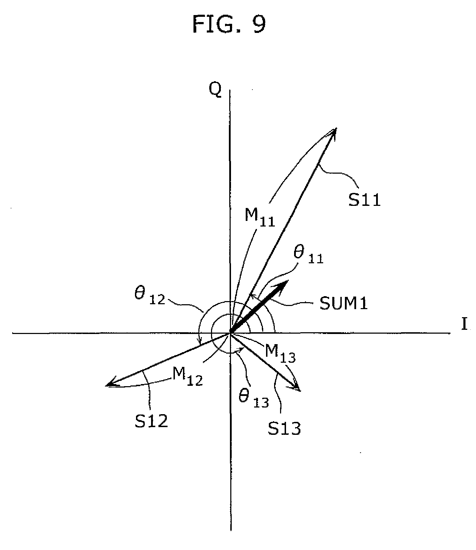

FIG. 9 is a graph for explaining calculation of radiation loss using vector synthesis.
[Fig. 10]

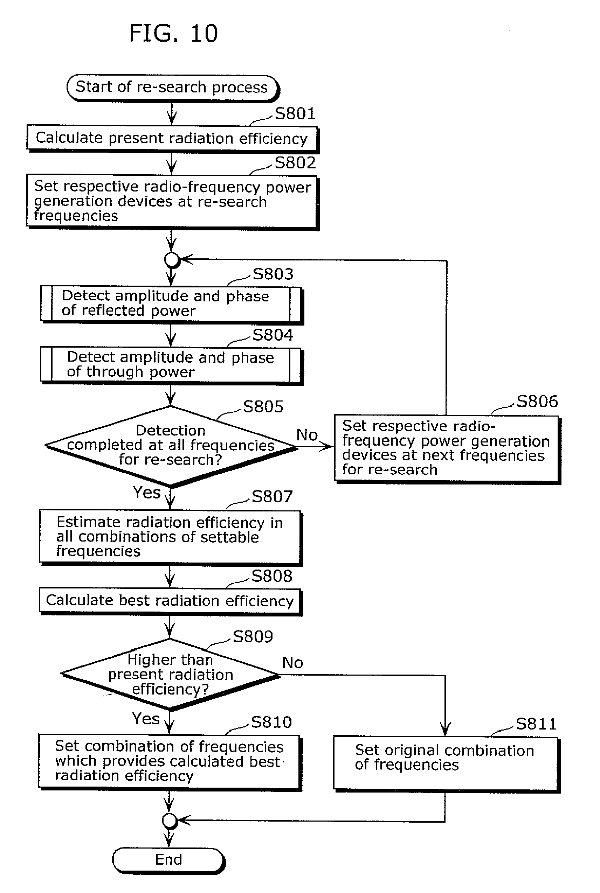

FIG. 10 is a flowchart showing a control procedure in a re-search process of the radio-frequency heating apparatus according to the first embodiment.
[Fig. 11]

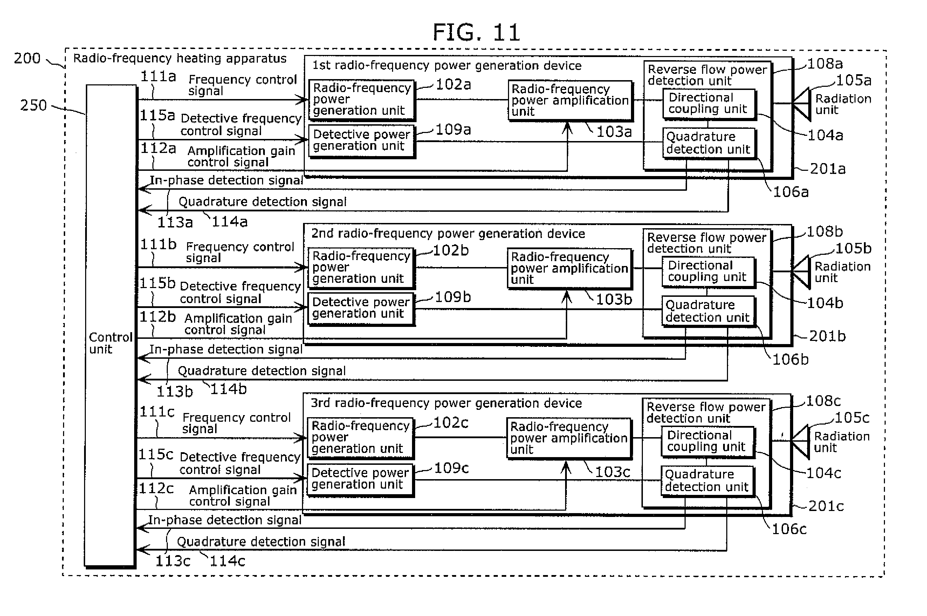

FIG. 11 is a block diagram showing a basic structure of a radio-frequency heating apparatus according to the second embodiment.
[Fig. 12]

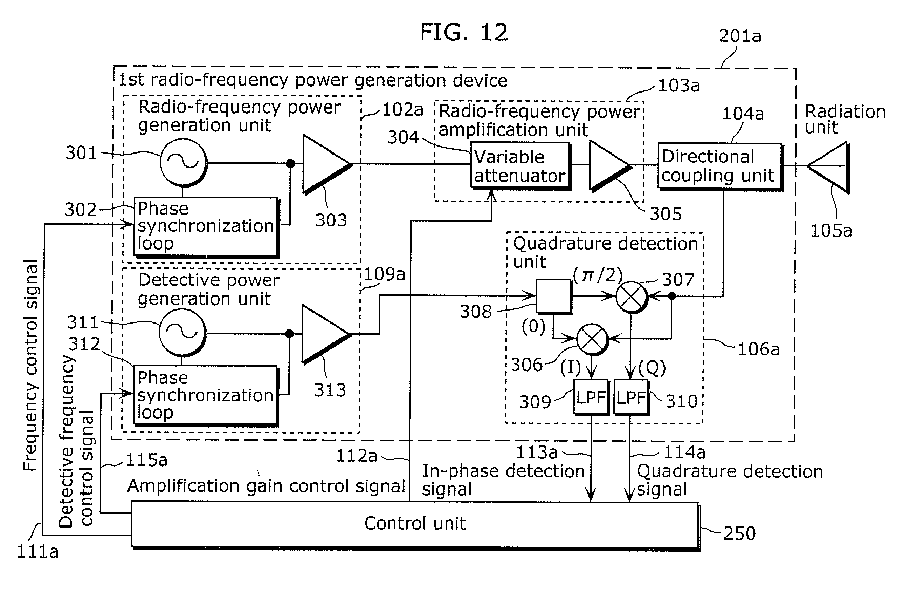

FIG. 12 is a block diagram showing a structure of a radio-frequency power generation device according to the second embodiment.
[Fig. 13]

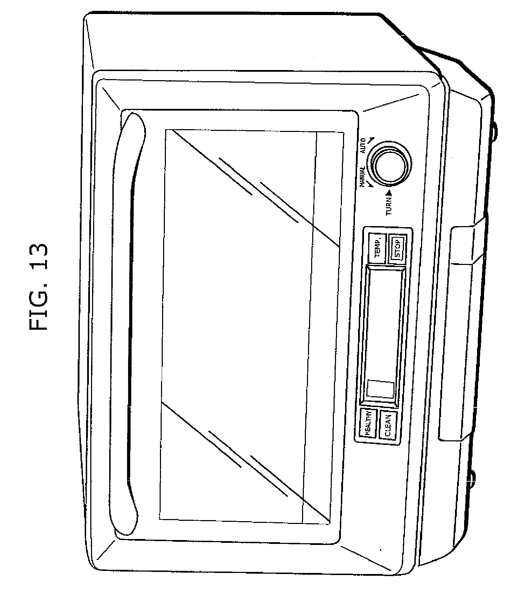

FIG. 13 shows appearance of the radio-frequency heating apparatus.

[Description of Embodiments]

(First embodiment)

The following describes the first embodiment of the present invention with reference to the drawings.
FIG. 1 is a block diagram showing a structure of a radio-frequency heating apparatus of the present invention.

A radio-frequency heating apparatus 100 includes a first radio-frequency power generation device 101a, a second radio-frequency power generation device 101b, a third radio-frequency power generation device 101c, and a control unit 150. In the following descriptions, the first radio-frequency power generation device 101a, the second radio-frequency power generation device 101b, and the third radio-frequency power generation device 101c may be referred to as the radio-frequency power generation device 101a, the radio-frequency power generation device 101b, and the radio-frequency power generation device 101c, respectively. The radio-frequency heating apparatus 100 further includes a heating chamber in which an object is placed.

Each of the radio-frequency power generation devices 101a, 101b, and 101c includes a corresponding one of radio-frequency power generation units 102a, 102b, and 102c, a corresponding one of radio-frequency power amplification units 103a, 103b, and 103c, a corresponding one of radiation units 105a, 105b, and 105c, a corresponding one of reverse flow power detection units 108a, 108b, and 108c, and a corresponding one of distribution units 107a, 107b, and 107c. Each of the reverse flow power detection units 108a, 108b, and 108c is composed of a corresponding one of directional coupling units 104a, 104b, and 104c and a corresponding one of quadrature detection units 106a, 106b, and 106c.

Each of the radio-frequency power generation units 102a, 102b, and 102c, each of the distribution units 107a, 107b, and 107c, each of the radio-frequency power amplification units 103a, 103b, and 103c, each of the directional coupling units 104a, 104b, and 104c, and each of the radiation units 105a, 105b, and 105c are connected in series in this order. Each of the quadrature detection units 106a, 106b, and 106c is connected to a corresponding one of the distribution units 107a, 107b, and 107c and a corresponding one of the directional coupling units 104a, 104b and 104c.

Each of the radio-frequency power generation units 102a, 102b, and 102c is a frequency-variable power generation unit which generates radio-frequency power at a frequency indicated by a corresponding one of frequency control signals 111a, 111b, and 111c provided from the control unit 150.

Each of the radio-frequency power generated by the respective radio-frequency power generation units 102a, 102b, and 102c is input to a corresponding one of the radio-frequency power amplification units 103a, 103b, and 103c via a corresponding one of the distribution units 107a, 107b, and 107c. The radio-frequency power input to each of the radio-frequency power amplification units 103a, 103b, and 103c is amplified to power appropriate in a heating process for an object, and passes through a corresponding one of the directional coupling units 104a, 104b, and 104c, thereafter being emitted from a corresponding one of the radiation units 105a, 105b, and 105c to the object.

Each of the distribution units 107a, 107b, and 107c distributes the radio-frequency power input from a corresponding one of the radio-frequency power generation units 102a, 102b, and 102c, into radio-frequency power which is to be input to a corresponding one of the radio-frequency power amplification units 103a, 103b, and 103c, and radio-frequency power which is to be input to a corresponding one of the quadrature detection units 106a, 106b, and 106c.

Each of the directional coupling units 104a, 104b, and 104c separates reverse flow power provided from a corresponding one of the radiation units 105a, 105b, and 105c, and outputs the separated reverse flow power to the corresponding quadrature detection units 106a, 106b, and 106c.

Each of the quadrature detection units 106a, 106b, and 106c performs quadrature detection on the separated reverse flow power provided from a corresponding one of the radiation units 105a, 105b, and 105c via a corresponding one of the directional coupling units 104a, 104b, and 104c, using part of the radio-frequency power generated by a corresponding one of the radio-frequency power generation units 102a, 102b, and 102c, and thereby generates a corresponding of in-phase detection signals 113a, 113b, and 113c and a corresponding one of quadrature detection signals 114a, 114b, and 114c, and outputs a corresponding one of the generated in-phase detection signals 113a, 113b, and 113c and a corresponding one of the generated quadrature detection signals 114a, 114b, and 114c to the control unit 150.

The control unit 150 uses the in-phase detection signals 113a, 113b, and 113c and the quadrature detection signals 114a, 114b, and 114c received from the quadrature detection units 106a, 106b, and 106c in the respective radio-frequency power generation devices 101a, 101b, and 101c, to detect the amplitude and phase of the reverse flow power which flows into the respective radio-frequency power generation devices 101a, 101b, and 101c via the corresponding radiation units 105a, 105b, and 105c. The amplitude can be calculated from the root mean square of the in-phase detection signals 113a, 113b, and 113c and the quadrature detection signals 114a, 114b, and 114c, and the phase can be calculated from the arc tangent (tan-1) of a value obtained by dividing the quadrature detection signals 114a, 114b, and 114c by the in-phase detection signals 113a, 113b, and 113c.

Furthermore, the control unit 150 is connected to the respective radio-frequency power generation units 102a, 102b, and 102c, and the respective radio-frequency power amplification units 103a, 103b, and 103c. The control unit 150 outputs the respective frequency control signals 111a, 111b, and 111c to the corresponding radio-frequency power generation units 102a, 102b, and 102c, and outputs respective amplification gain control signals 112a, 112b, and 112c to the corresponding radio-frequency amplification units 103a, 103b, and 103c.

Each of the radio-frequency power generation units 102a, 102b, and 102c changes a frequency according to a corresponding one of the respective frequency control signals 111a, 111b, and 111c provided from the control unit 150. Each of the radio-frequency power amplification units 103a, 103b, and 103c changes an amplification gain according to a corresponding one of the amplification gain control signals 112a, 112b, and 112c provided from the control unit 150.

FIG. 2 is a flowchart showing a basic control procedure in the radio-frequency heating apparatus 100 of FIG. 1. The radio-frequency heating apparatus 100 of FIG. 1 carries out the following processing in the control unit 150.

First, the control unit 150 detects the reflected power and the through power separately at each frequency in the respective radio-frequency power generation devices 101a, 101b, and 101c (Step S201). Specifically, the control unit 150 controls (sets) the frequencies of the respective radio-frequency power generation units 102a, 102b, and 102c and the amplification gains of the respective radio-frequency power generation amplification units 103a, 103b, and 103c. By controlling the frequencies and the amplification gains, the control unit 150 loads detected output signals (the in-phase detection signals 113a, 113b, and 113c and the quadrature detection signals 114a, 114b, and 114c) of the reverse flow power provided from the respective quadrature detection units 106a, 106b, and 106c, to separately detect the amplitude and phase of the reflected power and the amplitude and phase of the through power in the radio-frequency power generation devices 101a, 101b, and 101c. In other words, the control unit 150 sequentially updates the frequency control signals 111a, 111b, and 111c, thereby causing the radio-frequency power generation units 102a, 102b, and 102c to sequentially generate a plurality of frequencies. This means that the radio-frequency power generation units 102a, 102b, and 102c generate radio-frequency power at frequencies that are switched temporally. Furthermore, for every change in frequencies, the control unit 150 detects the amplitude and phase of the reflected power and the amplitude and phase of the through power in the respective radio-frequency power generation devices 101a, 101b, and 101c at the time of actually radiating radio-frequency power. Details of how to detect the reflected power and the through power are described later.

Herein, "reflected power" represents reflected reverse flow power which is part of radio-frequency power radiated from one of the radiation units 105a, 105b, and 105c of the respective radio-frequency power generation devices 101a, 101b, and 101c and reflected back into the same one of the radiation units 105a, 105b, and 105c of the respective radio-frequency power generation devices 101a, 101b, and 101c. "Through power" represents pass-through reverse flow power which is part of radio-frequency power radiated from another one of the radiation units 105a, 105b, and 105c of the respective radio-frequency power generation devices 101a, 101b, and 101c and enters the one of radiation units 105a, 105b, and 105c of the respective radio-frequency power generation devices 101a, 101b, and 101c.

It is to be noted that the reflected power and the through power are defined by only the interrelation between the radiation units 105a, 105b, and 105c that radiate radio-frequency power and the radiation units 105a, 105b, and 105c that receive the radio-frequency power, and are not influenced by which path the radiated radio-frequency power takes. That is, for example, the through power from the second radio-frequency power generation device 101b to the first radio-frequency power generation device 101a includes, of the radio-frequency power radiated from the second radio-frequency power generation device 101b via the radiation unit 105b, radio-frequency power directly reached the radiation unit 105a, radio-frequency power reflected in the heating chamber or on an object being heated therein and then reached the radiation unit 105a, and radio-frequency power transmitted through the object and reached the radiation unit 105a.

In the following descriptions, "reflected power" and "reflected reverse flow power" indicate the same power, and "through power" and "pass-through reverse flow power" indicate the same power.

Next, on the basis of the amplitude and phase of the reflected power and the amplitude and phase of the through power at each of the detected frequencies, the combination of frequencies which provides the best radiation efficiency is determined (Step S202). Specifically, on the basis of measured amplitude information or phase information of the reflected power and the through power of the respective radio-frequency power generation devices 101a, 101b, and 101c, frequency values and amplification gains in the respective radio-frequency power generation devices 101a, 101b, and 101c with which frequency values and amplification gains the radiation efficiency is highest are determined by calculation.

To put it differently, in the process (Step S201) of separately detecting the reflected power and the through power at each frequency, part of all the combinations of settable frequencies for the respective radio-frequency power generation units 102a, 102b, and 102c in the corresponding radio-frequency power generation devices 101a, 101b, and 101c is sequentially set, and the amplitude and phase of the reflected power and the amplitude and phase of the through power which are detected for each of the set part of all the combinations are calculated. Subsequently, in the process (Step S202) of determining the combination of frequencies which provides the best radiation efficiency, the amplitude and phase of the reflected power and the amplitude and phase of the through power to be detected for each of the other combinations among all the combinations of settable frequencies when the other combinations are sequentially set are estimated using the calculation result obtained in Step S201. Furthermore, in Step S202, of all the combinations of frequencies, one combination is determined as frequencies to be generated by the radio-frequency power generation units 102a, 102b, and 102c to heat an object, from the calculation result for each of the part of all the combinations calculated in Step S201 and the estimation result for each of the other combinations.

In addition, in Step S202, the combination of amplification gains to be set for the radio-frequency power amplification units 103a, 103b, and 103c is also determined.

A method of determining frequencies based on amplitude and phase is described later.

Subsequently, the radio-frequency power generation units 102a, 102b, and 102c and the radio-frequency power amplification units 103a, 103b, and 103c in the respective radio-frequency power generation devices 101a, 101b, and 101c are set to provide the determined respective frequencies and amplification gains, and a heating process is performed (Step S203).

As described above, the radio-frequency power heating apparatus 100 according to the present embodiment includes: a heating chamber in which an object to be heated is placed; the plurality of radio-frequency power generation devices 101a, 101b, and 101c from which radio-frequency power is radiated into the heating chamber; and the control unit 150 configured to set, for the radio-frequency power generation devices 101a, 101b, and 101c, a combination of frequencies of the radio-frequency power radiated by the radio-frequency power generation devices 101a, 101b, and 101c, wherein each of the radio-frequency power generation devices 101a, 101b, and 101c includes: a radio-frequency power generation unit configured to generate radio-frequency power at a frequency that is set by the control unit 150; a radiation unit configured to radiate, into the heating chamber, the radio-frequency power generated by the radio-frequency power generation unit; and a reverse flow power detection unit configured to detect reverse flow power entering from the heating chamber into the radiation unit, the reverse flow power detection unit is configured to separately detect reflected reverse flow power and pass-through reverse flow power based on the frequency of the radio-frequency power generation unit set by the control unit 150, the reflected reverse flow power being part of the radio-frequency power radiated from the radiation unit of one of the radio-frequency power generation devices 101a, 101b, and 101c which is reflected back into the radiation unit of the one of the radio-frequency power generation devices 101a, 101b, and 101c, and the pass-through reverse flow power being part of the radio-frequency power radiated from the radiation unit of another one of the radio-frequency power generation devices 101a, 101b, and 101c which enters the one of the radio-frequency power generation devices 101a, 101b, and 101c, the control unit 150 is configured to sequentially set a plurality of combinations of frequencies for the radio-frequency power generation units 102a, 102b, and 102c, and determine, based on amplitude and phase of the reflected reverse flow power and amplitude and phase of the pass-through reverse flow power detected for each of the set combinations of frequencies, one of the combinations of frequencies to be set for the, radio-frequency power generation units 102a, 102b, and 102c in the respective radio-frequency power generation devices 101a, 101b, and 101c to heat the object, and the radio-frequency power generation devices 101a, 101b, and 101c are configured to heat the object by radiating the radio-frequency power at the determined frequencies into the heating chamber.

With the above structure of the radio-frequency heating apparatus 100, when the radio-frequency power generation units 102a, 102b, and 102c are caused to emit radio-frequency power at different frequencies in practice, the amplitude and phase of the reflected reverse flow power and the amplitude and phase of the pass-through reverse flow power at each of the frequencies in the radio-frequency power generation units 102a, 102b, and 102c can be detected (obtained) from the in-phase detection signals 113a, 113b, and 113c and the quadrature detection signals 114a, 114b, and 114c that are detected by the reverse flow power detection units 108a, 108b, and 108c. Using the obtained values of the amplitude and phase of the reflected reverse flow power and the amplitude and phase of the pass-through reverse flow power at each of the frequencies, radiation loss generated in an assumed operation in which a given combination of the frequencies is set for the respective radio-frequency power generation units 102a, 102b, and 102c is calculated so that the combination of the frequencies in the respective radio-frequency power generation units 102a, 102b, and 102c at which the radiation efficiency of the whole radio-frequency heating apparatus 100 is highest can be determined. This means that actual measurement needs to be executed on not all the combinations of the frequencies of the respective radio-frequency power generation units 102a, 102b, and 102c, but, from the minimum number of measurement values, the optimum radiation efficiency can be determined by calculation, thus allowing for a reduction in measurement that takes time. This makes it possible to shorten a preparation time for specifying efficient radiation after a user's start of heating operation of the radio-frequency heating apparatus until a start of actual heating.

Herein, the radiation efficiency indicates a ratio of power absorbed by an object to be heated, to the radio-frequency power radiated from the radiation units 105a, 105b, and 105c of the respective radio-frequency power generation devices 101a, 101b, and 101c, and specifically is obtained by dividing, by the sum total of radiated power, power obtained by subtracting radiation loss from the sum total of radiated power. The radiation loss indicates, out of the radio-frequency power radiated from the radiation units 105a, 105b, and 105c of the respective radio-frequency power generation devices 101a, 101b, and 101c, power (reflected power) reflected and thus returned to one of the radiation units 105a, 105b, and 105c which emitted the power, and power (through power) absorbed by one of the radiation units 105a, 105b, and 105c that is different from the one which emitted the power. In short, the radiation loss indicates power that is not absorbed by an object to be heated but is absorbed by any one of the radiation units 105a, 105b, and 105c. A specific method of obtaining the radiation loss is described later.

FIG. 3 is a block diagram showing a specific structure of the first radio-frequency power generation device 101a. Components in FIG. 3 with functions common to the components shown in FIG. 1 are denoted by the same reference numerals, and explanations thereof are omitted.

The first radio-frequency power generation device 101a includes the radio-frequency power generation unit 102a, the radio-frequency power amplification unit 103a, the directional coupling unit 104a, the radiation unit 105a, the quadrature detection unit 106a, and the distribution unit 107a.

The radio-frequency power generation unit 102a, the distribution unit 107a, the radio-frequency power amplification unit 103a, the directional coupling unit 104a, and the radiation unit 105a are connected in series in this order. The quadrature detection unit 106a is connected to the distribution unit 107a and the directional coupling unit 104a.

The radio-frequency power generation unit 102a includes an oscillation unit 301, a phase synchronization loop 302, and an amplification unit 303. The phase synchronization loop 302 is connected to the control unit 150. While a single power amplifier is shown as the amplification unit 303 in FIG. 3, a plurality of power amplifiers may be provided in multistage series-connection or combined in parallel in order to obtain output with high power and at high level.

The distribution unit 107a divides the radio-frequency power generated in the radio-frequency power generation unit 102a, into two portions, one of which is provided to the radio-frequency power amplification unit 103a and the other of which is provided to the quadrature detection unit 106a. For the distribution unit 107a, a resistance divider may be used, and a directional coupler and a hybrid coupler are both applicable.

The radio-frequency power amplification unit 103a includes a variable attenuator 304 and a radio-frequency power amplifier 305, and the variable attenuator 304 is connected to the control unit 150. While a single radio-frequency power amplifier 305 is shown in FIG. 3, a plurality of radio-frequency power amplifiers 305 may be provided in multistage series-connection or combined in parallel in order to obtain output with high power and at high level.

A structure of the variable attenuator 304 is well known. For example, it is possible to use a plural-bit step variable attenuator or a continuously variable attenuator.

A plural-bit step variable attenuator (for example, three-bit step variable attenuator) is used in digital control, and performs stepwise control on attenuation in several stages by combination of turning on and off of a FET switch with switching of paths. The attenuation is determined based on an external input control signal indicating an attenuation.

On the other hand, a continuously variable attenuator is used in analog voltage control and, for example, a continuously variable attenuator using a PIN junction diode is known. By changing a reverse bias voltage of the PIN junction diode, the radio-frequency resistance between both electrodes is changed so that the attenuation is changed continuously. The attenuation is determined based on the external input amplification gain control signal 112a indicating an attenuation.

The variable attenuator 304 may be replaced by a variable gain amplifier. In this case, amplification gain is determined based on an external input control signal indicating an amplification gain.

The directional coupling unit 104a is structured so as to separate part of reverse flow power that flows from the radiation unit 105a back to the radio-frequency power amplification unit 103a. Furthermore, the directional coupling unit 104a is well known. For the directional coupling unit 104a, a directional coupler may be used, and a circulator and a hybrid coupler are both applicable.

The quadrature detection unit 106a includes a $\Pi/2$ phase shifter 308, an in-phase detection mixer 306, a quadrature detection mixer 307, an in-phase output-side low-pass filter 309, and a quadrature output-side low-pass filter 310, and the in-phase output-side low-pass filter 309 and the quadrature output-side low-pass filter 310 are connected to the control unit 150.

The radio-frequency power generated by the oscillation unit 301 and the phase synchronization loop 302 is input to the amplification unit 303. The radio-frequency power amplified by the amplification unit 303 is input to the radio-frequency power amplifier 305 via the distribution unit 107a and the variable attenuator 304. The radio-frequency power amplified by the radio-frequency power amplifier 305 is radiated from the radiation unit 105a via the directional coupling unit 104a.

Part of the radio-frequency power distributed by the distribution unit 107a is input to the quadrature detection unit 106a. The radio-frequency power input to the quadrature detection unit 106a is input to the $\Pi/2$ phase shifter 308, which outputs in-phase radio-frequency power whose phase is the same as the input radio-frequency power, and quadrature radio-frequency power whose phase is shifted from the input radio-frequency power by $\Pi/2$, and the in-phase radio-frequency power is input to the in-phase detection mixer 306 and the quadrature radio-frequency power is input to the quadrature detection mixer 307. Although not shown, in order to optimize detection properties of the quadrature detection unit 106a, a radio-frequency power amplifier, a fixed attenuator, or further a low-pass filter may be provided between the distribution unit 107a and the quadrature detection unit 106a.

In the meantime, the reverse flow power separated by the directional coupling unit 104a is input to the quadrature detection unit 106a. The separated reverse flow power input to the quadrature detection unit 106a is divided into two portions which are then input to the in-phase detection mixer 306 and the quadrature detection mixer 307, respectively. Although not shown, in order to optimize detection properties of the quadrature detection unit 106a, a radio-frequency power amplifier, a fixed attenuator, or further a low-pass filter may be provided between the directional coupling unit 104a and the quadrature detection unit 106a.

The in-phase detection mixer 306 performs detection by integrating the separated reverse flow power with the in-phase radio-frequency power input from the Π/2 phase shifter 308, that is, performs synchronous detection on the separated reverse flow power using the in-phase radio-frequency power, and as a multiplication result of the two input signals, outputs the in-phase detection signal 113a to the control unit 150 via the in-phase output-side low-pass filter 309. Likewise, the quadrature detection mixer 307 performs detection by integrating the separated reverse flow power with the quadrature radio-frequency power input from the Π/2 phase shifter 308, that is, performs synchronous detection on the separated reverse flow power using the quadrature radio-frequency power, and as a multiplication result of the two input signals, outputs the quadrature detection signal 114a to the control unit 150 via the quadrature output-side low-pass filter 310.

The in-phase output-side low-pass filter 309 and the quadrature output-side low-pass filter 310 are provided in order to reduce interference with power at adjacent frequencies. Accordingly, they are structured so as to suppress frequency components corresponding to a difference in frequency between two given points at which the difference is smallest of all the predetermined frequencies to be used in the heating process.

It is to be noted that the second radio-frequency power generation device 101b and the third radio-frequency power generation device 101cin FIG. 1 also have structures of the same kind. Specifically, the radio-frequency power generation units 102a, 102b, and 102c have the same structures, the distribution units 107a, 107b, and 107c have the same structures, the radio-frequency power amplification units 103a, 103b, and 103c have the same structures, the directional coupling units 104a, 104b, and 104c have the same structures, and the quadrature detection units 106a, 106b, and 106c have the same structures. In addition, while the radio-frequency heating apparatus 100 includes the three radio-frequency power generation devices, the number of radio-frequency power generation devices in the radio-frequency heating apparatus 100 is not limited to those shown in FIG. 1.

<Method of detecting reflected power>

Next, a method of detecting reflected power of the radio-frequency heating apparatus 100 is described.

FIG. 4 is a flowchart showing a control procedure for detecting the reflected power in the radio-frequency heating apparatus 100 according to the present embodiment.

The control unit 150 of the radio-frequency heating apparatus 100 detects the reflected power of the respective radio-frequency power generation devices 101a, 101b, and 101c in the following control procedure.

As shown in FIG. 4, the control procedure for detecting the reflected power is different between the case where all the radio-frequency power generation devices 101a, 101b, and 101c operate at different frequencies and the case where two or more of the radio-frequency power generation devices 101a, 101b, and 101c operate at the same frequencies. In other words, the control unit 150 determines whether or not the frequencies of all the radio-frequency power generation devices 101a, 101b, and 101c are different (Step S401).

In the case where all the radio-frequency power generation devices 101a, 101b, and 101c operate at different frequencies (Yes in Step S401), the control unit 150 loads the in-phase detection signals 113a, 113b, and 113c and the quadrature detection signals 114a, 114b, and 114c from the respective radio-frequency power generation devices 101a, 101b, and 101c, and detects the amplitude and phase of the reflected power in the respective radio-frequency power generation devices 101a, 101b, and 101c (Step S402).

It is to be noted that, when the respective quadrature detection units 106a, 106b, and 106c perform quadrature detection, it is necessary to know, in advance, the frequencies of radio-frequency power to be detected. The control unit 150, which sets the frequencies of the respective radio-frequency power generation units 102a, 102b, and 102c, has information on the frequencies of radio-frequency power radiated from the respective radio-frequency generation devices 101a, 101b, and 101c. The use of this frequency information allows each of the quadrature detection units 106a, 106b, and 106c to perform not only quadrature detection on the reflected power of a corresponding one of the radio-frequency power generation devices 101a, 101b, and 101c, but also quadrature detection on the through power from another one of the radio-frequency power generation devices. The control unit 150 has thus the frequency information on the radio-frequency power radiated from the respective radio-frequency power generation devices 101a, 101b, and 101c and therefore is capable of loading the in-phase detection signals and quadrature detection signals of the reflected power to detect the amplitude and phase of the reflected power. The same applies to loading of the in-phase detection signals and quadrature detection signals of the through power.

On the other hand, in the case where not all the radio-frequency power generation devices 101a, 101b, and 101c operate at different frequencies (No in Step S401), in other words, in the case where at least two of the frequencies of all the radio-frequency power generation devices 101a, 101b, and 101c are the same, different procedures are taken for a radio-frequency power generation device which provides a frequency not overlapping with a frequency of another one of the radio-frequency power generation devices and for the at least two radio-frequency power generation devices which provide frequencies overlapping with a frequency of another one of the radio-frequency power generation devices.

In the case where two or more radio-frequency power generation devices operate at the same frequency (for example, in the case where the first radio-frequency power generation device 101a operates at a frequency A and the second and third radio-frequency power generation devices 101b and 101c operate at a frequency B), the control unit 150 loads the in-phase detection signals and quadrature detection signals of the radio-frequency power generation device (for example, the first radio-frequency power generation device 101a) which provides a frequency not overlapping with a frequency of another one of the radio-frequency power generation devices, to detect the amplitude and phase of the reflected power of the radio-frequency power generation device.

On the other hand, the control unit 150 controls the radio-frequency power generation devices (for example, the second and third radio-frequency power generation devices 101b and 101c) which provide frequencies overlapping with a frequency of another one of the radio-frequency power generation devices so that output power of the radio-frequency power generation device (for example, the third radio-frequency power generation device 101c) other than the radio-frequency power generation device (for example, the second radio-frequency power generation device 101b) of which reflected power is to be detected is at a level that does not affect detection of the reflected power of the radio-frequency power generation device of which reflected power is to be detected (Step S404). Specifically, the radio-frequency power amplification unit (for example, the radio-frequency power amplification unit 103c) of the radio-frequency power generation device (for example, the third radio-frequency power generation device 101c) other than the radio-frequency power generation device (for example, the second radio-frequency power generation device 101b) of which reflected power is to be detected is set to have a low amplification gain. In other words, the amplification gain of the radio-frequency power amplification unit of the radio-frequency power generation device (for example, the second radio-frequency power generation device 101b) of which reflected power is to be detected is set so that the amplitude of the through power from a radio-frequency power generation device different from the above radio-frequency power generation device to the above radio-frequency power generation device is smaller than the amplitude of the reflected power of the above radio-frequency power generation device.

After setting the amplification gain of the radio-frequency power amplification unit of the radio-frequency power generation device other than the radio-frequency power generation set of which reflected power is to be detected, the control unit 150 loads the in-phase detection signal and quadrature detection signal of the radio-frequency power generation device of which reflected power is to be detected, and then detects the amplitude and phase of the reflected power of such a radio-frequency power generation device (Step S405).

The control unit 150 carries out the above operations for all the radio-frequency power generation devices which provide frequencies overlapping with a frequency of another one of the radio-frequency power generation devices. In other words, whether or not the above detection of the reflected power has been completed is determined using, as detection subjects of reflected power, all the radio-frequency power generation devices (for example, the second and third radio-frequency power generation devices 101b and 101c) which provide frequencies overlapping with a frequency of another one of the radio-frequency power generation devices (Step S406). When the detection of reflected power has been completed in all the radio-frequency power generation devices which provide frequencies overlapping with a frequency of another one of the radio-frequency power generation devices (Yes in Step S406), this process of detecting the reflected power ends. On the other hand, when the detection of reflected power of any one of the radio-frequency power generation devices which provide frequencies overlapping with a frequency of another one of the radio-frequency power generation devices has not been completed (No in Step S406), the processing returns to the above Step S404 using, as a detection subject, a different one of the radio-frequency power generation devices (for example, the third radio-frequency power generation device 101c) which provides a frequency overlapping with a frequency of another one of the radio-frequency power generation devices (Step S407), and the processing continues.

In this manner, the control unit 150 detects the amplitude and phase of the reflected power in all the radio-frequency power generation devices 101a, 101b, and 101c.

As above, in the method of detecting the reflected power of the radio-frequency heating apparatus 100 according to the present embodiment, the control unit 150 sets the amplification gains of the radio-frequency power amplification units 103a, 103b, and 103c so that, when the reverse flow power detection unit in one of the radio-frequency power generation devices (for example, the second radio-frequency power generation device 101b) detects the reflected power, the amplitude of the through power from another one of the radio-frequency power generation devices (for example, the third radio-frequency power generation device 101c) is smaller than the amplitude of the reflected power in the one of the radio-frequency power generation devices.

<Method of detecting through power>

Next, an example of a method of detecting through power of the radio-frequency heating apparatus 100 is described.

FIG. 5 is a flowchart showing the first control procedure for detecting the through power in the radio-frequency heating apparatus 100 according to the present embodiment.

The control unit 150 of the radio-frequency heating apparatus 100 detects the through power among the respective radio-frequency power generation devices 101a, 101b, and 101c in the following control procedure.

As shown in FIG. 5, the control unit 150 first outputs radio-frequency power from only a given one of the radio-frequency power generation devices (for example, the first radio-frequency power generation device 101a operating at a frequency A), and sets the amplification gains of the radio-frequency power amplification units of the respective radio-frequency power generation devices so that output power of the other radio-frequency power generation devices (for example, the second and third radio-frequency power generation devices 101b and 101c operating at given frequencies) leads to a sufficiently low detection level of the reflected power in the respective radio-frequency power generation devices (Step S501).

Specifically, the control unit 150 instructs the radio-frequency power amplification units 103b and 103c of the radio-frequency power generation devices (for example, the second and third radio-frequency power generation devices 101b and 101c) other than the one of the radio-frequency power generation devices (for example, the first radio-frequency power generation device 101a) to provide, for example, -30 dB, thereby setting the variable attenuator 304 to have an attenuation of -30 dB. By so doing, the reflected power in the radio-frequency power generation devices (for example, the second and third radio-frequency power generation devices 101b and 101c) other than the one of the radio-frequency power generation devices is reduced to a level that does not affect detection of the through power from the one of the radio-frequency power generation devices to the radio-frequency power generation devices other than the one of the radio-frequency power generation devices (for example, the through power from the first radio-frequency power generation device 101a to the second radio-frequency power generation device 101b, and the through power from the first radio-frequency power generation device 101a to the third radio-frequency power generation device 101c). For example, the attenuation of the attenuator 151b in the second radio-frequency power generation device 101b is set at -30 dB so that the reflected power in the second radio-frequency power generation device 101b is reduced to a level that does not affect detection of the through power from the first radio-frequency power generation device 101a to the second radio-frequency power generation device 101b.

Next, the control unit 150 sets the frequencies of the radio-frequency power generation units of the respective radio-frequency power generation units sets (for example, the second and third radio-frequency power generation devices 101b and 101c) so that the frequencies of the other radio-frequency power generation devices (for example, the second and third radio-frequency power generation devices 101b and 101c) which output radio-frequency power at a controlled low level are the same as the frequency (for example, frequency A) of one of the radio-frequency power generation devices (for example, the first radio-frequency power generation device idea) which outputs radio-frequency power (Step S502).

Next, the control unit 150 loads the in-phase detection signals and quadrature detection signals of the other radio-frequency power generation devices (for example, the second and third radio-frequency power generation devices 101b and 101c) and detects the amplitude and phase of the through power from the one of the radio-frequency power generation devices (for example, the first radio-frequency power generation device 101a) which outputs radio-frequency power to the other radio-frequency power generation devices (for example, the second and third radio-frequency power generation devices 101b and 101c) (for example, the through power from the first radio-frequency power generation device 101a to the second radio-frequency power generation device 101b, and the through power from the first radio-frequency power generation device 101a to the third radio-frequency power generation device 101c) (Step S503).

The control unit 150 determines whether or not the above operations have been completed in all the radio-frequency power generation devices 101a, 101b, and 101c (Step S504). In other words, the control unit 150 determines whether or not the through power from all the radio-frequency power generation devices 101a, 101b, and 101c has been detected. When it is determined that the operations have been completed (Yes in Step S504), this process of detecting the through power ends.

On the other hand, when the detection of the through power from all the radio-frequency power generation devices 101a, 101b, and 101c has not been competed (No in Step S504), the processing returns to the above Step S501 using, as a detection subject, the through power from a different one of the radio-frequency power generation devices (Step S505), and the processing continues.

By repeating the above process, the amplitude and phase of the through power among all the radio-frequency power generation devices 101a, 101b, and 101c are detected.

As above, in the method of detecting through power in the radio-frequency power heating apparatus 100 according to the present embodiment, when the reverse flow power detection unit in one of the radio-frequency power generation devices (for example, the second radio-frequency power generation device 101b) detects the through power from another one of the radio-frequency power generation devices (for example, the first radio-frequency power generation device 101a), the control unit 150 sets the radio-frequency power generation unit of the one of the radio-frequency power generation devices to provide the same frequency as the radio-frequency power generation unit of the other one of the radio-frequency power generation devices, and sets the amplification gains of the radio-frequency power amplification units 103a, 103b, and 103c so that the amplitude of the reflected power in the one of the radio-frequency power generation devices is smaller than the amplitude of the through power from the other one of the radio-frequency power generation devices.

It is to be noted that the method of detecting through power is not limited to the above procedure. The following describes another example of the method of detecting through power of the radio-frequency heating apparatus 100.

FIG. 6 is a flowchart showing the second control procedure for detecting the through power in the radio-frequency heating apparatus 100 according to the present embodiment.

As shown in FIG. 6, the control unit 150 first sets amplification gains of the radio-frequency power amplification units so that output power of only a given radio-frequency power generation device (for example, the first radio-frequency power generation device 101a operating at a frequency A) leads to a sufficient low detection level of the reflected power in such a radio-frequency power generation device (Step S601).

Next, the control unit 150 controls (sets) the radio-frequency power generation unit in one of the radio-frequency power generation devices (for example, the first radio-frequency power generation device 101a) to provide the same frequency (for example, a frequency B) as the frequency at which any one of the radio-frequency power generation devices (for example, the second radio-frequency power generation device 101b) is operating among the other radio-frequency power generation units (for example, the second radio-frequency power generation device 101b operating at the frequency B and the third radio-frequency power generation device 101c operating at a frequency C) (Step S602).

Next, the control unit 150 loads the in-phase detection signals and the quadrature detection signals from one of the radio-frequency power generation devices (for example, the first radio-frequency power generation device 101a) controlled to output reduced power, and detects the amplitude and phase of the through power provided from another one of the radio-frequency power generation devices (for example, the second radio-frequency power generation device 101b) operating at the same frequency to the one of the radio-frequency power generation devices (for example, the first radio-frequency power generation device 101a) controlled to output reduced power (S603).

The control unit 150 determines whether or not the above operations have been completed in all the radio-frequency power generation devices (for example, the second radio-frequency power generation device 101b and the third radio-frequency power generation device 101c) other than the one of the radio-frequency power generation devices (for example, the first radio-frequency power generation device 101a) (Step S604). In other words, it is determined whether or not the through power from all the radio-frequency power generation devices other than the one of the radio-frequency power generation units to the one of the radio-frequency power generation units has been detected. When it is determined that the detection has not been completed (No in Step S604), the one of the radio-frequency power generation devices is set at the same frequency as the frequency of another one of the radio-frequency power generation devices among all the the radio-frequency power generation devices other than the one of the radio-frequency power generation devices (Step S605), and the processing returns to the above Step S602 and continues.

By repeating the above process, the amplitude and phase of the through power from all the other radio-frequency power generation devices (for example, the second radio-frequency power generation device 101b and the third radio-frequency power generation device 101c) to the one of the radio-frequency power generation devices (for example, the first radio-frequency power generation device 101a) controlled to output reduced power are detected.

When the through power from all the other radio-frequency power generation devices to the one of the radio-frequency power generation devices has been detected (Yes in Step S604), it is determined whether or not the detection of the through power has been completed in all the radio-frequency power generation devices 101a, 101b, and 101c (Step S606).

When it is determined that the detection has not been completed (No in Step S606), the processing returns to the above Step S601 using, as a detection subject, the through power from a different one of the radio-frequency power generation device (Step S607), and the processing continues. Specifically, the radio-frequency power amplification unit is controlled to provide an amplification gain such that output power of a next given one of the radio-frequency power generation devices (for example, the second radio-frequency power generation device 101b operating at the frequency B) leads to a sufficient low detection level of the reflected power in the radio-frequency power generation device (Step S601), and the amplitude and phase of the through power among all the radio-frequency power generation devices are detected likewise (Step S603).

On the other hand, when it is determined that the detection of the through power in all the radio-frequency power generation devices 101a, 101b, and 101c has been completed (Yes in Step S606), this process of detecting the through power ends. By so doing, the amplitude and phase of the through power among all the radio-frequency power generation devices 101a, 101b, and 101c are detected.

As above, the method of detecting the amplitude and phase of the through power in the second control procedure is different from the method of detecting the amplitude and phase of the through power in the first control procedure in that the frequencies of the respective radio-frequency power generation devices of which through power is to be detected are updated sequentially.

<Pre-search process>

The following describes, in detail, a process of determining, using the above-described method of detecting the reflected power and the above-described method of detecting the through power, the combination of frequencies of radio-frequency power to be generated by the radio-frequency power generation units 102a, 102b, and 102c to heat an object. This process corresponds to Steps S201 and S202 of the steps shown in FIG. 2.

FIG. 7 is a flowchart showing a control procedure in a process (pre-search process) of determining the optimum heating condition before the heating process in the radio-frequency heating apparatus 100 according to the present embodiment.

The control unit 150 of the radio-frequency heating apparatus 100 performs the pre-search process in the following control procedure before the heating process.

As shown in FIG. 7, first, the frequencies of the respective radio-frequency power generation units 102a, 102b, and 102c are set so that the frequencies of the respective radio-frequency power generation devices 101a, 101b, and 101c are predetermined initial frequencies for pre-search (for example, the first radio-frequency power generation device provides a frequency A0, the second radio-frequency power generation device provides a frequency B0, and the third radio-frequency power generation device provides a frequency C0) (Step S701).

Next, in the above-described control procedure for detecting the reflected power, the amplitude and phase of the reflected power in all the radio-frequency power generation devices 101a, 101b, and 101c are detected (Step S702).

After that, it is determined whether or not the amplitude and phase of the reflected power at all the frequencies predetermined in the pre-search process have been detected (Step S703). When the amplitude and phase of the reflected power at not all the frequencies have been detected (No in Step S703), in other words, when there is a frequency at which the amplitude and phase of the reflected power have not been detected, the frequencies of the respective radio-frequency power generation units 102a, 102b, and 102c are set (Step S704).

Specifically, when the detection of the reflected power in all the radio-frequency power generation devices 101a, 101b, and 101c has been completed, then the frequencies of the respective radio-frequency power generation units 102a, 102b, and 102c are set so that the frequencies of the respective radio-frequency power generation devices 101a, 101b, and 101c are next frequencies predetermined for pre-search (for example, the first radio-frequency power generation device provides a frequency A1, the second radio-frequency power generation device provides a frequency B1, and the third radio-frequency power generation device provides a frequency C1) (Step S704), and the amplitude and phase of the reflected power in all the radio-frequency power generation devices 101a, 101b, and 101c are detected likewise (Step S702).

By repeating the above, the amplitude and phase of the reflected power in all the radio-frequency power generation devices 101a, 101b, and 101c at all the frequencies predetermined for pre-search are detected.

When the detection of the amplitude and phase of the reflected power in all the radio-frequency power generation devices 101a, 101b, and 101c at all the frequencies predetermined for pre-search has been completed (Yes in Step S703), then the amplitude and phase of the through power among all the radio-frequency power generation devices 101a, 101b, and 101c are detected in the above-described control procedure for detecting the through power (Step S705).

After that, it is determined whether or not the amplitude and phase of the through power at all the frequencies predetermined in the pre-search process have been detected (Step S706). When the amplitude and phase of the through power at not all the frequencies have been detected (No in Step S706), in other words, when there is a frequency at which the amplitude and phase of the through power have not been detected, the frequencies of the respective radio-frequency power generation units 102a, 102b, and 102c are set (Step S707).

Specifically, when the detection of the through power in all the radio-frequency power generation devices 101a, 101b, and 101c has been completed, then the frequencies of the respective radio-frequency power generation units 102a, 102b, and 102c are set so that the frequencies of the respective radio-frequency power generation devices 101a, 101b, and 101c are next frequencies predetermined for pre-search (Step S707), and the amplitude and phase of the through power in all the radio-frequency power generation devices 101a, 101b, and 101c are detected likewise (Step S705).

By repeating the above, the amplitude and phase of the through power in all the radio-frequency power generation devices 101a, 101b, and 101c at all the frequencies predetermined for pre-search are detected. In other words, the detection of the amplitude and phase of the through power in all the radio-frequency power generation devices 101a, 101b, and 101c at all the frequencies predetermined for pre-search is completed.

It is to be noted that even in the case where an actual frequency at which the heating process is performed is determined at a 1 MHz step, the frequency predetermined for pre-search may be set at, for example, a 2 MHz step or a 5 MHz step, and the frequencies to be actually measured may be thinned out. For the thinned part, approximation and interpolation may be applied using the measured values.

As a result of the completion of the detection of the amplitude and phase of the reflected power in all the radio-frequency power generation devices 101a, 101b, and 101c, and the detection of the amplitude and phase of the through power among all the radio-frequency power generation devices 101a, 101b, and 101c, at all the frequencies predetermined for pre-search (Yes in Step S706), a matrix is obtained which represents, using amplitude and phase, reflected power properties of the respective radio-frequency power generation devices and through power properties among the respective radio-frequency power generation devices at respective frequencies.

The process so far from the start of the pre-search process (Step S701 to S707) corresponds to the process of separately detecting the reflected power and the through power at each frequency in the respective radio-frequency power generation devices in FIG. 2 (Step S201).

Next, the control unit 150 estimates the radiation efficiency of the radio-frequency heating apparatus 100 obtained in the case where all the combinations of settable frequencies are set (Step S708). The following describes a method of estimating the radiation efficiency of the radio-frequency heating apparatus 100 obtained in the case where all the combinations of settable frequencies are set.

FIG. 8 is an example of a matrix which shows the amplitude and phase of the reflected power in the respective radio-frequency power generation devices at respective frequencies, and the amplitude and phase of the through power among the respective radio-frequency power generation devices at the respective frequencies.

This matrix corresponds to the S parameters that are commonly used to represent reflection properties of respective ports and transmission properties among respective ports of radio-frequency transmission devices such as amplifiers and filters, assuming that the radiation units 105a, 105b, and 105c of the respective radio-frequency power generation devices 101a, 101b, and 101c are input/output ports for radio-frequency power. In the following descriptions, the above matrix is referred to as S parameters (of the radio-frequency heating apparatus 100).

An example of a method of calculating the radiation loss using the obtained S parameter is described with reference to FIG. 8. FIG. 8 shows an example which uses three radio-frequency power generation devices (for instance, an example in which the radio-frequency power generation devices 101a, 101b, and 101c are defined as the first, second, and third radio-frequency power generation devices, respectively). The example shown in FIG. 8 results from sweeping detection of amplitude M and phase θ of the reflected power and the through power at intervals of 1 MHz in a set frequency band for pre-search from 2,400 MHz to 2,500 MHz. When the attached numerals of the S parameter are the same, then it indicates the reflected power. For example, S11 indicates the reflected power of the first radio-frequency power generation device. When the attached numerals of the S parameter are different, then it indicates the through power from the radio-frequency power generation device of the last numeral to the radio-frequency power generation device of the first numeral. For example, S12 indicates the through power from the second radio-frequency power generation device to the first radio-frequency power generation device. As shown in FIG. 8, the sweeping quadrature detection over respective frequencies can lead to the S parameters represented with the amplitudes M and the phases θ of the reflected power and the through power. The attached numerals of the amplitude M and the phase θ represent a frequency and an S parameter and, for example, S31 at the frequency of 2,402 MHz is represented by the amplitude $M_{2402.31}$ and the phase $\theta_{2402.31}$.

The radiation loss in a given combination of frequencies of the respective radio-frequency power generation devices 101a, 101b, and 101c can be calculated using the S parameters represented by the detected amplitude and phase. For example, the radiation loss of the radio-frequency power generation device 101a can be calculated by summing S11, S12, and S13 at the frequencies set for the respective radio-frequency power generation devices 101a, 101b, and 101c. In calculating the sum of the S parameters, the sum of amplitude components is calculated when the frequencies are different while a vector synthesis of amplitude components and phase components is calculated when the frequencies are the same. A smaller sum of the S parameters indicates a lower radiation loss. In the following descriptions, the radiation loss is a synonym of the sum of the S parameters.

Next, how to determine the radiation loss of the whole radio-frequency heating apparatus 100 is described where the reflected power S11 of the first radio-frequency power generation device 101a has amplitude $M_{11}$ and phase $\theta_{11}$, the through power S12 from the second radio-frequency power generation device 101b to the first radio-frequency power generation device 101a has amplitude $M_{12}$ and phase $\theta_{12}$, and the through power S13 from the third radio-frequency power generation device 101c to the first radio-frequency power generation device 101a has amplitude $M_{13}$ and phase $\theta_{13}$.

(i) In the case where all the frequencies set for the respective radio-frequency power generation devices 101a, 101b, and 101c are different

In the case where all the frequencies set for the respective radio-frequency power generation devices 101a, 101b, and 101c are different, the radiation loss |S11+S12+S13| in the first radio-frequency power generation device 101a is given by the following Expression 1-1.

$$|S11+S12+S13| = M_{11} + M_{12} + M_{13} \quad \cdots (Ex.1\text{-}1)$$

The radiation loss |S21+S22+S23| in the second radio-frequency power generation device 101b and the radiation loss |S31+S32+S33| in the third radio-frequency power generation device 101c are given by the following Expressions 1-2 and 1-3, respectively, in the same manner as Expression 1-1.

Suppose that the through power S21 from the first radio-frequency power generation device 101a to the second radio-frequency power generation device 101b has amplitude $M_{21}$ and phase $\theta_{21}$, the reflected power S22 of the second radio-frequency power generation device 101b has amplitude $M_{22}$ and phase $\theta_{22}$, and the through power S23 from the third radio-frequency power generation device 101c to the second radio-frequency power generation device 101b has amplitude $M_{23}$ and phase $\theta_{23}$. Furthermore, suppose that the through power S31 from the first radio-frequency power generation device 101a to the third radio-frequency power generation device 101c has amplitude $M_{31}$ and phase $\theta_{31}$, the through power S32 from the second radio-frequency power generation device 101b to the third radio-frequency power generation device 101c has amplitude $M_{32}$ and phase $\theta_{32}$, and the reflected power S33 of the third radio-frequency power generation device 101c has amplitude $M_{33}$ and phase $\theta_{33}$.

$$|S21+S22+S23| = M_{21} + M_{22} + M_{23} \quad \cdots (\text{Ex.1-2})$$

$$|S31+S32+S33| = M_{31} + M_{32} + M_{33} \quad \cdots (\text{Ex.1-3})$$

The total radiation loss of all the radio-frequency power generation devices 101a, 101b, and 101c, indicated by these expressions 1-1 to 1-3, is the radiation loss of the whole radio-frequency heating apparatus 100 with the combination of such frequencies.

(ii) In the case where all the frequencies set for the respective radio-frequency power generation devices 101a, 101b, and 101c are the same In the case where all the frequencies set for the respective radio-frequency power generation devices 101a, 101b, and 101c are the same, the radiation loss |S11+S12+S13| in the first radio-frequency power generation device 101a is given by the following Expression 2-1.

[Math 1]

$$|S11+S12+S13|=$$
$$\sqrt{(M_{11} \bullet \sin\theta_{11} + M_{12} \bullet \sin\theta_{12} + M_{13} \bullet \sin\theta_{13})^2 + (M_{11} \bullet \cos\theta_{11} + M_{12} \bullet \cos\theta_{12} + M_{13} \bullet \cos\theta_{13})^2}$$
$$\cdots (\text{Ex.2-1})$$

The radiation loss |S21+S22+S23| in the second radio-frequency power generation device 101b and the radiation loss |S31+S32+S33| in the third radio-frequency power generation device 101c are given by the following Expressions 2-2 and 2-3, respectively, in the same manner as Expression 1-1.

[Math 2]

$$|S21+S22+S23|=$$
$$\sqrt{(M_{21} \bullet \sin\theta_{21} + M_{22} \bullet \sin\theta_{22} + M_{23} \bullet \sin\theta_{23})^2 + (M_{21} \bullet \cos\theta_{21} + M_{22} \bullet \cos\theta_{22} + M_{23} \bullet \cos\theta_{23})^2}$$
$$\cdots (\text{Ex.2-2})$$

[Math 3]

$$|S31+S32+S33| =$$

$$\sqrt{(M_{31} \bullet \sin\theta_{31} + M_{32} \bullet \sin\theta_{32} + M_{33} \bullet \sin\theta_{33})^2 + (M_{31} \bullet \cos\theta_{31} + M_{32} \bullet \cos\theta_{32} + M_{33} \bullet \cos\theta_{33})^2}$$

$$\cdots (Ex.2\text{-}3)$$

The total radiation loss of all the radio-frequency power generation devices 101a, 101b, and 101c, indicated by these expressions 2-1 to 2-3, is the radiation loss of the whole radio-frequency heating apparatus 100 with the combination of such frequencies.

This is illustrated by the vector synthesis as shown in FIG. 9.

Specifically, the through power S11, S12, and S13 to the first radio-frequency power generation device 101a is plotted in the IQ plane (in-phase/quadrature plane), and a vector synthesis of the plotted power results in a radiation loss SUM1 in the first radio-frequency power generation device 101a. Likewise, the radiation losses in the other radio-frequency power generation devices (a radiation loss SUM2 in the second radio-frequency power generation device 101b and a radiation loss SUM3 in the third radio-frequency power generation device 101c) are also calculated. The total absolute value of these radiation losses is the radiation loss of the whole radio-frequency heating apparatus 100.

(iii) In the case where two of the frequencies set for the respective radio-frequency power generation devices 101a, 101b, and 101c are the same

For example, in the case where the frequency set for the first radio-frequency power generation device 101a and the frequency set for the second radio-frequency power generation device 101b are the same while the frequency set for the third radio-frequency power generation device 101c is different, the radiation loss |S11+S12+S13| in the first radio-frequency power generation device 101a is given by the following expression.

[Math 4]

$$|S11+S12+S13| =$$

$$\sqrt{(M_{11} \bullet \sin\theta_{11} + M_{12} \bullet \sin\theta_{12})^2 + (M_{11} \bullet \cos\theta_{11} + M_{12} \bullet \cos\theta_{12})^2} + M_{13}$$

$$\cdots (Ex.3\text{-}1)$$

The radiation loss |S21+S22+S23| in the second radio-frequency power generation device 101b and the radiation loss |S31+S32+S33| in the third radio-frequency power generation device 101c are given by the following Expressions 3-2 and 3-3, respectively, in the same manner as Expression 3-1.

[Math 5]

$$|S21+S22+S23| =$$

$$\sqrt{(M_{21} \bullet \sin\theta_{21} + M_{22} \bullet \sin\theta_{22})^2 + (M_{21} \bullet \cos\theta_{21} + M_{22} \bullet \cos\theta_{22})^2} + M_{23}$$

$$\cdots (Ex.3\text{-}2)$$

[Math 6]

$$|S31+S32+S33|=$$
$$\sqrt{(M_{31} \circ \sin\theta_{31} + M_{32} \circ \sin\theta_{32})^2 + (M_{31} \circ \cos\theta_{31} + M_{32} \circ \cos\theta_{32})^2} + M_{33}$$

$$\cdots(\text{Ex.3-3})$$

The total radiation loss of all the radio-frequency power generation devices 101a, 101b, and 101c, indicated by these expressions 3-1 to 3-3, is the radiation loss of the whole radio-frequency heating apparatus 100 at such frequencies. That is, the through power among the radio-frequency power generation devices at the same frequency can be represented by the vector synthesis while the through power among the radio-frequency power generation devices at different frequencies can be represented by the total amplitude.

Using the radiation losses given by the above expressions 1-1 to 1-3, 2-1 to 2-3, and 3-1 to 3-3, the control unit 150 calculates a radiation loss generated in an assumed operation in which a given combination of the frequencies is set for the radio-frequency power generation units 102a, 102b, and 102c, and determines the radiation efficiency from the calculated radiation loss, in the process (Step S708) of estimating the radiation efficiency of the radio-frequency heating apparatus 100 with all the combinations of settable frequencies set therein.

Next, the combination of frequencies of the respective radio-frequency power generation devices 102a, 102b, and 102c which provides the best radiation efficiency of the whole radio-frequency heating apparatus 100 is determined (Step S709).

The process (Step S708) of estimating the radiation efficiency of the radio-frequency heating apparatus 100 with all the combinations of settable frequencies set therein and the process (Step S709) of determining the combination of frequencies of the respective radio-frequency power generation units 102a, 102b, and 102c which provides the best radiation efficiency of the whole radio-frequency heating apparatus 100 correspond to the process (Step S202) of determining the combination of frequencies which provides the best radiation efficiency shown in FIG. 2.

After that, the radio-frequency power generation devices 101a, 101b, and 101c are set to provide the determined combination of frequencies (Step S710).

The control unit 150 may further determine output power of the radio-frequency power generation devices 101a, 101b, and 101c. The determination of output power is performed, for example, as follows.

When the frequencies are determined in the process (Step S709) of determining the combination of frequencies in the above method, then the withstand voltages of the amplifiers at such frequencies are read out from frequency characteristics of the withstand voltages of the amplifiers measured and stored in advance. Even in the case where the peak level of a voltage between the source and the drain of the amplifier increases due to reverse flow power, the output power is controlled and determined so as not to exceed the read-out withstand voltage.

Subsequently, the respective radio-frequency power generation units 102a, 102b, and 102c are controlled so as to provide the determined frequencies, and the respective radio-frequency power amplification units 103a, 103b, and 103c are controlled so as to provide the determined amplification gains.

As above, before the heating process for an object to be heated, the control unit 150 performs, as the pre-search process, the determination of the combination of a plurality of frequencies of radio-frequency power to be generated by the respective radio-frequency power generation units 102a, 102b, and 102c in the corresponding radio-frequency power generation devices 101a, 101b, and 101c. This allows the object to be heated under the optimum heating condition.

Furthermore, this process makes it possible to determine the values of frequencies of the respective radio-frequency power generation units 102a, 102b, and 102c at which the whole system (the radio-frequency heating apparatus 100) has the best radiation efficiency, by calculating, using the resultant amplitude and phase detected separately from the reflected power and the through power in the respective radio-frequency power generation devices at set frequencies, the radiation loss generated in an assumed operation in which a given combination of the frequencies is set for the respective radio-frequency power generation units 102a, 102b, and 102c. With this, as compared to the case of measuring all the combinations of frequencies of the respective radio-frequency power generation units 102a, 102b, and 102c, a drastic reduction in time is possible as seen in the above example. The pre-search process of determining the optimum frequency condition for heating can be performed in a short time before the main heating process is actually performed after a user presses the start button of the radio-frequency heating apparatus 100.

For example, suppose that three radio-frequency power generation devices are used to measure 101 points in the frequency band from 2.4 GHz to 2.5 GHz. A conventional system requires about 0.1 millisecond to measure one frequency point and therefore requires about 100 seconds to complete the $101^3$ measurements for all the combinations. Thus, in the case of measuring all the combinations of the frequencies of the respective radio-frequency power generation devices, it takes as much as about 100 seconds before the start of heating.

In contrast, with the structure according to this embodiment, the operation is merely such that in-phase detection signals and quadrature detection signals of the reflected power and the through power are measured by the respective radio-frequency power generation devices at the 101 points in the frequency band from 2.4 GHz to 2.5 GHz and their amplitude and phase are calculated, with the result that the amplitude and phase of the reflected reverse flow power and the amplitude and phase of the pass-through reverse flow power at respective frequencies can be obtained during a period of 30 milliseconds or so that takes for the measurements of the 303 points. Once the S parameters represented by the amplitude and phase at these 303 points are obtained, only the calculation by the control unit 150 that is much faster than the measurement is required to determine the frequencies of the respective radio-frequency power generation devices which provide the optimum radiation efficiency, and this allows a preparation time for heating to be one second or less that is typically tolerated by users as the preparation time for heating.

In other words, the control unit 150 sequentially sets part of combinations among all the combinations of settable frequencies for the respective radio-frequency power generation units 102a, 102b, and 102c in the corresponding radio-frequency power generation devices 101a, 101b, and 101c, calculates the amplitude and phase of the reflected power and the amplitude and phase of the through power detected by the reverse flow power detection units 108a, 108b, and 108c for each set part of combinations, estimates, using the calculation results, the amplitude and phase of the reflected power and the amplitude and phase of the through power to be detected by the reverse flow power detection units 108a, 108b, and 108c for each of the other combinations among all the combinations of settable frequencies when the other combinations are sequentially set, and determines, from the calculation results for each of the part of combinations and the estimation results for each of the other combinations, one of all the combinations of frequencies of radio-frequency power to be generated by the respective radio-frequency power generation units 102a, 102b, and 102c to heat an object.

With this, it is possible to determine the combination of frequencies which provides the optimum radiation efficiency, by measuring only part of the combinations (the 303 combinations at maximum) without measuring all the combinations (the $101^3$ combinations) of settable frequencies for the respective radio-frequency power generation units 102a, 102b, and 102c.

While the amplitude and phase of all the through power are detected after the amplitude and phase of all the reflected power are detected in the present embodiment, it may also be possible that the amplitude and phase of all the reflected power are detected after the detection of the amplitude and phase of all the through power is completed or that the amplitude and phase of the reflected power and the amplitude and phase of the through power are detected alternately. Furthermore, because the amplitude and phase of the reflected power in the radio-frequency power generation unit which is outputting radio-frequency power can be detected at the same time when detecting the amplitude and phase of the through power, the amplitude and phase of the through power and the amplitude and phase of the reflected power may be detected at the same time.

<Re-search process>

The following describes, in detail, a process of re-determining, using the above-described method of detecting the reflected power and the above-described method of detecting the through power, the combination of frequencies of radio-frequency power to be generated by the radio-frequency power generation units 102a, 102b, and 102c, during the process of heating an object. This process corresponds to Steps S201 and S202 of the steps shown in FIG. 2. That is, while the process corresponding to Steps S201 and S202 is carried out before heating an object in the case of the pre-search process, the re-search process is different in that the process corresponding to Steps S201 and S202 is carried out during the process of heating an object.

FIG. 10 is a flowchart showing a control procedure in the re-search process of the radio-frequency heating apparatus 100 according to the present embodiment.

The control unit 150 of the radio-frequency heating apparatus 100 performs the re-search process in the following control procedure during the heating process.

As shown in FIG. 10, first, the amplitude and phase of the reflected power and the through power in the respective radio-frequency power generation units 102a, 102b, and 102c at frequencies and output power that are currently used in the heating process are detected in the above control procedure for detecting the reflected power and in the above control procedure for detecting the through power to calculate the present radiation efficiency of the whole system (Step S801).

Next, the frequencies of the radio-frequency power generation units 102a, 102b, and 102c are set so that the radio-frequency power generation units sets 101a, 101b, and 101c provide predetermined re-search frequencies (Step S802), and the amplitude and phase of the reflected power in all the radio-frequency power generation devices 101a, 101b, and 101c are detected in the above control procedure for detecting the reflected power (Step S803).

Subsequently, in the above-described control procedure for detecting the through power, the amplitude and phase of the through power among all the radio-frequency power generation devices 101a, 101b, and 101c are detected (Step S804).

After that, it is determined whether or not the detection at all the frequencies predetermined in the re- search process has been completed (Step S805). When the detection has not been completed (No in Step S805), the combination of frequencies of the radio-frequency power to be generated by the radio-frequency power generation units 102a, 102b, and 102c is set to the next combination of frequencies determined for re-search (Step S806), and the above Steps S803 and S804 are repeated.

By repeating the above, the amplitude and phase of the reflected power and the through power in all the radio-frequency power generation devices 101a, 101b, and 101c at all the predetermined pre-search frequencies are detected.

The process so far from the setting of the respective radio-frequency power generation devices 101a, 101b, and 101c at the re-search frequencies (Step S802 to S806) corresponds to the process of separately detecting the reflected power and the through power at each frequency in the respective radio-frequency power generation devices in FIG. 2 (Step S201).

When the detection of the amplitude and phase of the reflected power and the through power in all the radio-frequency power generation devices 101a, 101b, and 101c at all the re-search frequencies has been completed (Yes in Step S805), the radiation loss to be generated in an assumed operation in which a given combination of the frequencies is set for the respective radio-frequency power generation units 102a, 102b, and 102c is estimated by calculation based on the information on the amplitude and phase of the reflected power and the through power as described in the pre-search process. That is, the radiation efficiency is estimated (Step S807). It is to be noted that details of this process (Step S807) of estimating the radiation efficiency are the same as those of the process (Step S708) of estimating the radiation efficiency shown in FIG. 7.

Next, the value of the best radiation efficiency of the whole radio-frequency heating apparatus 100 is calculated (Step S808).

The process (Step S807) of estimating the radiation efficiency of the radio-frequency heating apparatus 100 and the process (Step S808) of calculating the value of the best radiation efficiency in the case where all the combinations of settable frequencies are set correspond to the process (Step S202) of determining the combination of frequencies which provides the best radiation efficiency in FIG. 2.

Subsequently, the value of the best radiation efficiency calculated in the re-search process (the value calculated in Step S808) and the value of the present radiation efficiency calculated before (the value calculated in Step S801) are compared. That is, it is determined whether or not the value of the best radiation efficiency calculated in the re-search process is higher than the present radiation efficiency calculated before (Step S809).

When the value of the best radiation efficiency calculated in the re-search process is better than the value of the present radiation efficiency calculated before (Yes in Step S809), the radio-frequency power generation units 102a, 102b, and 102c are set to have a combination of frequencies which provides the best radiation efficiency calculated in the re-search process (Step S810). On the other hand, when the value of the present radiation efficiency calculated before is better than the value of the best radiation efficiency calculated in the re-search process (No in Step S809), the radio-frequency power generation units 102a, 102b, and 102c are set to have an original combination of frequencies that is used before the re-search process is performed (Step S811).

As above, the radio-frequency heating apparatus 100 according to the present embodiment determines, during the process of heating an object, a combination of a plurality of frequencies of radio-frequency power to be generated by the respective radio-frequency power generation units 102a, 102b, and 102c in the corresponding radio-frequency power generation devices 101a, 101b, and 101c, as the re-search process, and sets the respective radio-frequency power generation units 102a, 102b, and 102c in the corresponding radio-frequency power generation devices 101a, 101b, and 101c to have a new combination of frequencies determined in the re-search process.

This re-search process allows the radio-frequency heating apparatus 100 according to the present embodiment to always heat an object under the optimum heating condition even when, during the heating process, the optimum heating condition changes due to a change in temperature or shape of the object being heated. Furthermore, in calculating the radiation efficiency in Step S807, the radiation loss in an assumed operation in which a given combination of the frequencies is set for the respective radio-frequency power generation units 102a, 102b, and 102c is calculated using the separately-detected results of the amplitude and phase of the reflected power and the through power in the respective radio-frequency power generation devices at the set frequencies, with the result that the combination of frequencies of the respective radio-frequency power generation units 102a, 102b, and 102c which provides the best radiation efficiency can be determined in Step S808. With this, as compared to the case of measuring all the combinations of frequencies of the respective radio-frequency power generation units 102a, 102b, and 102c, a drastic reduction in time is possible as seen in the above example. The re-search process can be thus performed in a short time, which allows a reduction in the extension of the heating time including a required time for resetting due to changes in temperature or the like of an object being heated, with the result that a users' waiting time for heating can be reduced.

As to the timing of starting the re-search process, it may be such that the power values calculated from the amplitude and phase of the reflected power detected by loading the in-phase detection signals 113a, 113b, and 113c and the quadrature detection signals 114a, 114b, and 114c from the respective radio-frequency power generation devices 101a, 101b, and 101c are compared constantly or regularly with predetermined thresholds during the heating process, and when the power value of the reflected power in at least one or more radio-frequency power generation devices exceeds its threshold, the re-search process is performed.

With this, even when, during the heating process, the reflected power and the through power change due to a change in temperature or shape of the object being heated, the object can always be heated under the optimum heating condition by predetermining thresholds and performing the re-search process when the reflected power and the through power exceed the predetermined thresholds.

It may also be possible that, in performing the above pre-search process and the above re-search process, the amplification gains of the respective radio-frequency power amplification units 103a, 103b, and 103c are set so that the values of radio-frequency power provided from the respective radio-frequency power generation devices 101a, 101b, and 101c are smaller than the values of radio-frequency power used in the main heating process, in order to prevent a breakdown of the radio-frequency heating apparatus, especially the amplifier including a semiconductor device, caused by excessive reflected power and through power during the search processes.

(Second embodiment)

The following describes the second embodiment of the present invention with reference to the drawings.

The present embodiment is different from the first embodiment in that each of the radio-frequency power generation devices includes two radio-frequency power generation units instead of the distribution unit. With this structure, the detection accuracy of the reverse flow power by the reverse flow power detection unit can be improved by appropriately setting frequencies of the two radio-frequency power generation units.

The following mainly describes differences from the first embodiment. In the descriptions of the present embodiment, components with functions common to the components in the first embodiment are denoted by the same reference numerals, and explanations thereof are omitted. Furthermore, explanations of behavior common to the behavior in the first embodiment are omitted.

FIG. 11 is a block diagram showing a basic structure of a radio-frequency heating apparatus 200 according to the second embodiment of the present invention.

The radio-frequency heating apparatus 200 includes a first radio-frequency power generation device 201a, a second radio-frequency power generation device 201b, a third radio-frequency power generation device 201c, and a control unit 250. In the following descriptions, the first radio-frequency power generation device 201a, the second radio-frequency power generation device 201b, and the third radio-frequency power generation device 201c may be referred to as the radio-frequency power generation device 201a, the radio-frequency power generation device 201b, and the radio-frequency power generation device 201c, respectively.

Unlike the radio-frequency power generation devices 101a, 101b, and 101c shown in FIG. 1, the radio-frequency power generation devices 201, 201b, and 201c do not include the distribution units 107a, 107b, and 107c, but include detective power generation units 109a, 109b, and 109c. That is, each of the radio-frequency power generation devices 201a, 201b, and 201c includes a corresponding one of the radio-frequency power generation units 102a, 102b, and 102c, a corresponding one of the radio-frequency power amplification units 103a, 103b, and 103c, a corresponding one of the radiation units 105a, 105b, and 105c, a corresponding one of the reverse flow power detection units 108a, 108b, and 108c, and a corresponding one of the detective power generation units 109a, 109b, and 109c. Each of the reverse flow power detection units 108a, 108b, and 108c is composed of a corresponding one of the directional coupling units 104a, 104b, and 104c and a corresponding one of the quadrature detection units 106a, 106b, and 106c.

The radio-frequency power generation units 102a, 102b, and 102c, the radio-frequency power amplification units 103a, 103b, and 103c, the directional coupling units 104a, 104b, and 104c, and the radiation units 105a, 105b, and 105c are connected in series in this order. Each of the quadrature detection units 106a, 106b, and 106c is connected to a corresponding one of the detective power generation units 109a, 109b, and 109c and a corresponding one of the directional coupling units 104a, 104b and 104c.

The radio-frequency power generated in each of the radio-frequency power generation units 102a, 102b, and 102c is amplified by a corresponding one of the radio-frequency power amplification units 103a, 103b, and 103c to power appropriate in a heating process for an object, and passes through a corresponding one of the directional coupling units 104a, 104b, and 104c, thereafter being emitted from a corresponding one of the radiation units 105a, 105b, and 105c to the heating chamber.

Each of the directional coupling units 104a, 104b, and 104c separates reverse flow power provided from a corresponding one of the radiation units 105a, 105b, and 105c, and outputs the separated reverse flow power to a corresponding one of the quadrature detection units 106a, 106b, and 106c.

Each of the quadrature detection units 106a, 106b, and 106c performs quadrature detection on the separated reverse flow power provided from a corresponding one of the radiation units 105a, 105b, and 105c via a corresponding one of the directional coupling units 104a, 104b, and 104c, using the radio-frequency power generated by a corresponding one of the detective power generation units 109a, 109b, and 109c, and outputs a corresponding one of the in-phase detection signals 113a, 113b, and 113c and a corresponding one of the quadrature detection signals 114a, 114b, and 114c to the control unit 250. That is, unlike the first embodiment in which each of the quadrature detection units 106a, 106b, and 106c performs the quadrature detection using the radio-frequency power generated by a corresponding one of the radio-frequency power generation units in a corresponding one of the radio-frequency power generation devices in which the quadrature detection unit is included, the quadrature detection in the second embodiment is performed using the radio-frequency power generated by a corresponding one of the detective power generation units in a corresponding one of the radio-frequency power generation devices in which the quadrature detection unit is included. The radio-frequency power generated by the detective power generation units 109a, 109b, and 109c corresponds to radio-frequency power for detection according to an implementation of the present invention.

Each of the detective power generation units 109a, 109b, and 109c is a frequency-variable power generation unit that generates radio-frequency power at a frequency set by a corresponding one of detective frequency control signals 115a, 115b, and 115c provided from the control unit 250.

The control unit 250 uses the in-phase detection signals 113a, 113b, and 113c and the quadrature detection signals 114a, 114b, and 114c received from the quadrature detection units 106a, 106b, and 106c in the respective radio-frequency power generation devices 201a, 201b, and 201c, to detect the amplitude and phase of the reverse flow power which flows into the respective radio-frequency power generation devices 201a, 201b, and 201c via the corresponding radiation units 105a, 105b, and 105c. The amplitude and phase are calculated in the same manner as in the first embodiment.

As compared to the control unit 150 shown in FIG. 1, this control unit 250 further outputs, to each of the detective power generation units 109a, 109b, and 109c, a corresponding one of the detective frequency control signals 115a, 115b, and 115c indicating the frequencies of the radio-frequency power generated by the corresponding detective power generation units 109a, 109b, and 109c. Specifically, the control unit 250 is connected to the respective radio-frequency power generation units 102a, 102b, and 102c, the respective detective power generation units 109a, 109b, and 109c, and the respective radio-frequency power amplification units 103a, 103b, and 103c. The control unit 250 outputs each of the frequency control signals 111a, 111b, and 111c to a corresponding one of the radio-frequency power generation units 102a, 102b, and 102c of the respective radio-frequency power generation devices 201a, 201b, and 201c, outputs each of the detective frequency control signals 115a, 115b, and 115c to a corresponding one of the detective power generation units 109a, 109b, and 109c of the respective radio-frequency power generation devices 201a, 201b, and 201c, and outputs each of the amplification gain control signals 112a, 112b, and 112c to a corresponding one of the radio-frequency amplification units 103a, 103b, and 103c of the respective radio-frequency power generation devices 201a, 201b, and 201c.

As a result, the radio-frequency power generation units 102a, 102b, and 102c of the respective radio-frequency power generation devices 201a, 201b, and 201c change the frequencies according to the separate frequency control signals 111a, 111b, and 111c received from the control unit 250, and the detective power generation units 109a, 109b, and 109c of the respective radio-frequency power generation devices 201a, 201b, and 201c change the frequencies according to the separate detective frequency control signals 115a, 115b, and 115c received from the control unit 250. Furthermore, the radio-frequency power amplification units 103a, 103b, and 103c in the respective radio-frequency power generation devices 201a, 201b, and 201c change the amplification gains according to the separate amplification gain control signals 112a, 112b, and 112c received from the control unit 250.

FIG. 12 is a block diagram showing a specific structure of the first radio-frequency power generation device 201a. Components in FIG. 12 with functions common to the components shown in FIGS. 3 and 11 are denoted by the same reference numerals, and explanations thereof are omitted.

The first radio-frequency power generation device 201a includes the radio-frequency power generation unit 102a, the radio-frequency power amplification unit 103a, the directional coupling unit 104a, the radiation unit 105a, the quadrature detection unit 106a, and a detective power generation unit 109a. The radio-frequency power generation unit 102a, the radio-frequency power amplification unit 103a, the directional coupling unit 104a, and the radiation unit 105a are connected in series in this order. The quadrature detection unit 106a is connected to the detective power generation unit 109a and the directional coupling unit 104a.

The specific structure of the radio-frequency power generation device 102a is the same as that of the radio-frequency power generation device 102a explained in the first embodiment and shown in FIG. 3.

The specific structures of the radio-frequency power amplification unit 103a, the directional coupling unit 104a, and the quadrature detection unit 106a are the same as those of the radio-frequency power amplification unit 103a, the directional coupling unit 104a, and the quadrature detection unit 106a explained in the first embodiment and shown in FIG. 3.

The radio-frequency power generated by the oscillation unit 301 and the phase synchronization loop 302 is amplified by the amplification unit 303 and then input to the radio-frequency power amplifier 305 via the variable attenuator 304. The radio-frequency power amplified by the radio-frequency power amplifier 305 is radiated from the radiation unit 105a via the directional coupling unit 104a.

The detective power generation unit 109a specifically includes an oscillation unit 311, a phase synchronization loop 312, and an amplification unit 313, and generates the radio-frequency power indicated by the detective frequency control signal 115a. The oscillation 311 has the same structure as the oscillation unit 301, the phase synchronization loop 312 has the same structure as the phase synchronization loop 302, and the amplification unit 313 has the same structure as the amplification unit 303.

The radio-frequency power generated by the oscillation unit 311 and the phase synchronization loop 312 is amplified by the amplification unit 313 and then input to the quadrature detection unit 106a. The specific structure of the quadrature detection unit 106a is the same as the structure of the above quadrature detection unit 106a explained in the first embodiment and shown in FIG. 3.

With this structure, the in-phase detection signal 113a and the quadrature detection signal 114a provided from the quadrature detective unit 106a are signals which have frequency components for the difference between the frequency of the radio-frequency power generated by the radio-frequency power generation unit 102a and the frequency of the radio-frequency power generated by the detective power generation unit 109a. For example, in the case where the control unit 250 sets the frequencies of the radio-frequency power generation unit 102a and the detective power generation unit 109a by the frequency control signals 111a, 111b, and 111c and the detective frequency control signals 115a, 115b, and 115c so that the difference between the frequency of the radio-frequency power generated by the radio-frequency power generation unit 102a and the frequency of the radio-frequency power generated by the detective power generation unit 109a is 100 kHz, the in-phase detection signal 113a and the quadrature detection signal 114a provided from the quadrature detection unit 106a are signals which include frequency components of 100 kHz.

This makes the amplitude and phase of the reverse flow power detected by the control unit 250 less susceptible to changes in the DC offset generated in the in-phase detection mixer 306 and the quadrature detection mixer 307. In other words, the influences of changes in the DC offset that is superimposed on the in-phase detection signal 113a and the quadrature detection signal 114a can be reduced by the signal processing in the control unit 250. This allows the control unit 250 to further improve the calculation accuracy in calculating the amplitude and phase of the reverse flow power, with use of the in-phase detection signal 113a and the quadrature detection signal 114a.

Structures of the second radio-frequency power generation device 201b and the third radio-frequency power generation device 201c shown in FIG. 11 are also alike. In addition, while the radio-frequency heating apparatus 200 shown in FIG. 11 include the three radio-frequency power generation devices, the number of radio-frequency power generation devices is not limited.

As above, the radio-frequency heating apparatus 200 according to the present embodiment is different from the radio-frequency heating apparatus 100 according to the first embodiment in that each of the radio-frequency power generation devices includes two radio-frequency power generation units instead of the distribution unit. Specifically, the control unit 250 sets the frequencies of the radio-frequency power generation units 102a, 102b, and 102c and the detective power generation units 109a, 109b, and 109c by the frequency control signals 111a, 111b, and 111c and the detective frequency control signals 115a, 115b, and 115c so that the difference between the frequencies of the radio-frequency power generated by the radio-frequency power generation units 102a, 102b, and 102c and the frequencies of the radio-frequency power generated by the detective power generation units 109a, 109b, and 109c is always a fixed frequency. By so doing, the in-phase detection signals 113a, 113b, and 113c and the quadrature detection signals 114a, 114b, and 114c provided from the quadrature detective units 106a, 106b, and 106c are signals which always have frequency components for the difference between the frequencies of the radio-frequency power generated by the radio-frequency power generation units 102a, 102b, and 102c, and the frequencies of the radio-frequency power generated by the detective power generation units 109a, 109b, and 109c.

Consequently, the only difference is that while the in-phase detection signals 113a, 113b, and 113c and the quadrature detection signals 114a, 114b, and 114c provided from the quadrature detective units 106a, 106b, and 106c are the DC (direct-current) signals in the first embodiment, they are the signals which have the fixed frequency components in the second embodiment. The radio-frequency heating apparatus 200 according to the present embodiment thus operates basically in the same manner as the radio-frequency heating apparatus 100 according to the first embodiment.

Accordingly, the radio-frequency heating apparatus 200 according to the present embodiment is also capable of determining, in a very short time, the set frequencies of the respective radio-frequency power generation devices at which set frequencies the radiation efficiency is highest, in the control procedure shown in the flowchart of FIG. 2, as in the case of the radio-frequency heating apparatus 100 according to the first embodiment.

Furthermore, in the radio-frequency heating apparatus 200 according to the present embodiment, the in-phase detection signals 113a, 113b, and 113c and the quadrature detection signals 114a, 114b, and 114c provided from the quadrature detective units 106a, 106b, and 106c are the signals which have the fixed frequency components. This lowers susceptibility to fluctuation in the oscillation frequency in an oscillator and to changes in the DC offset generated due to external noise or the like, allowing for an improvement in the accuracy of detecting the reverse flow power. The radio-frequency heating apparatus 200 according to the present embodiment is capable of heating the object under a more optimum heating condition as compared to the radio-frequency heating apparatus 100 according to the first embodiment.

While the radio-frequency heating apparatus according to an implementation of the present invention has been described above based on the embodiments, the present invention is not limited to these embodiments. The scope of the present invention includes other embodiments that are obtained by making various modifications that those skilled in the art could think of, to these embodiments, or by combining components in different embodiments.

For example, while each of the radio-frequency power generation devices 201a, 201b, and 201c includes a corresponding one of the detective power generation units 109a, 109b, and 109c in the second embodiment, the structure may be such that a plurality of radio-frequency power generation devices are provided with one detective power generation unit.

Furthermore, the radio-frequency heating apparatus is not limited to setting of the combination of frequencies which provides the best radiation efficiency, and may determine the combination of frequencies at which an object can be heated to be in a desired state, and thus heat the object at frequencies in the determined combination. For example, in the case where the object to be heated is a boxed lunch, a combination of frequencies at which rice is heated while side dishes are not heated may be determined as the optimum combination of frequencies.

Such a radio-frequency heating apparatus is applicable, for example, as a microwave oven shown in FIG. 13 and is capable of detecting the optimum heating condition in a short time to heat an object. This improves users' convenience.

Furthermore, the present invention can not only be implemented as an apparatus, but also be implemented as a method which uses the processing means of this apparatus as steps.

[Industrial Applicability]

The present invention is capable of determining the optimum heating condition in a short time in a radio-frequency heating apparatus which includes a plurality of radio-frequency power generation devices, and therefore useful as a cooking home appliance including a microwave oven.

[Reference Signs List]

> 100, 200 Radio-frequency heating apparatus
> 101a, 201a First radio-frequency power generation device (Radio-frequency power generation device)
> 101b, 201b Second radio-frequency power generation device (Radio-frequency power generation device)
> 101c, 201c Third radio-frequency power generation device (Radio-frequency power generation device)
> 102a, 102b, 102c Radio-frequency power generation unit
> 103a, 103b, 103c Radio-frequency power amplification unit
> 104a, 104b, 104c Direction coupling unit
> 105a, 105b, 105c Radiation unit
> 106a, 106b, 106c Quadrature detection unit
> 107a, 107b, 107c Distribution unit
> 108a, 108b, 108c Reverse flow power detection unit
> 109a, 109b, 109c Detective power generation unit
> 111a, 111b, 111c Frequency control signal
> 112a, 112b, 112c Amplification gain control signal
> 113a, 113b, 113c In-phase detection signal
> 114a, 114b, 114c Quadrature detection signal
> 115a, 115b, 115v Detective frequency control signal
> 150, 250 Control unit
> 301, 311 Oscillation unit
> 302, 312 Phase synchronization loop
> 303, 313 Amplification unit
> 304 Variable attenuator
> 305 Radio-frequency power amplifier
> 306 In-phase detection mixer
> 307 Quadrature detection mixer
> 308 n/2 phase shifter
> 309 In-phase output-side low-pass filter

310 Quadrature output-side low-pass filter

**Claims**

1. A radio-frequency heating apparatus comprising:

   a heating chamber in which an object to be heated is placed;
   a plurality of radio-frequency power generation devices from which radio-frequency power is radiated into said heating chamber; and
   a control unit configured to control said radio-frequency power generation devices,
   wherein each of said radio-frequency power generation devices includes: a radio-frequency power generation unit configured to generate radio-frequency power at a frequency that is set by said control unit; a radiation unit configured to radiate, into said heating chamber, the radio-frequency power generated by said radio-frequency power generation unit; and a reverse flow power detection unit configured to detect reverse flow power entering from said heating chamber into said radiation unit,
   said reverse flow power detection unit is configured to separately detect reflected reverse flow power and pass-through reverse flow power based on the frequency of said radio-frequency power generation unit set by said control unit, the reflected reverse flow power being part of the radio-frequency power radiated from said radiation unit of one of said radio-frequency power generation devices which is reflected back into said radiation unit of the one of said radio-frequency power generation devices, and the pass-through reverse flow power being part of the radio-frequency power radiated from said radiation unit of another one of said radio-frequency power generation devices which enters the one of said radio-frequency power generation devices,
   said control unit is configured to sequentially set a plurality of combinations of frequencies for said radio-frequency power generation units, and determine, based on amplitude and phase of the reflected reverse flow power and amplitude and phase of the pass-through reverse flow power detected for each of the set combinations of frequencies, one of the combinations of frequencies to be set for said radio-frequency power generation units in said respective radio-frequency power generation devices to heat the object, and
   said radio-frequency power generation devices are configured to heat the object by radiating the radio-frequency power at the determined frequencies into said heating chamber.

2. The radio-frequency heating apparatus according to Claim 1, wherein said control unit is configured to

   (i) sequentially set part of combinations among all the combinations of frequencies settable for said radio-frequency power generation units in said respective radio-frequency power generation devices,
   (ii) calculate the amplitude and phase of the reflected reverse flow power and the amplitude and phase of the pass-through reverse flow power detected by said reverse flow power detection units for each of the set part of combinations, and estimate, using a calculation result, amplitude and phase of the reflected reverse flow power and amplitude and phase of the pass-through reverse flow power to be detected by said reverse flow power detection unit for each of other combinations among all the combinations of settable frequencies when the other combinations are sequentially set, and
   (iii) determine, from a calculation result for each of the part of combinations and an estimation result for each of the other combinations, one of all the combinations as the combination of frequencies to be set for said radio-frequency power generation units to heat the object.

3. The radio-frequency heating apparatus according to one of Claims 1 and 2,
   wherein said reverse flow power detection unit includes a quadrature detection unit,
   said quadrature detection unit is configured to output, to said control unit, an in-phase detection signal and a quadrature detection signal obtained by performing, using the radio-frequency power generated by said radio-frequency power generation unit, quadrature detection on the reverse flow power that has entered said radiation unit, and
   said control unit is configured to calculate, using the in-phase detection signal and the quadrature detection signal, the amplitude and phase of the reflected reverse flow power and the amplitude and phase of the pass-through reverse flow power.

4. The radio-frequency heating apparatus according to any one of Claims 1 to 3,
   wherein each of said radio-frequency power generation devices further includes a radio-frequency power amplification unit configured to amplify the radio-frequency power generated by said radio-frequency power generation unit and provide variable gains, and

said control unit is further configured to set an amplification gain for said radio-frequency power amplification unit.

5. The radio-frequency heating apparatus according to Claim 4, wherein, when said reverse flow power detection unit in one of said radio-frequency power generation devices detects the pass-through reverse flow power radiated from another one of said radio-frequency power generation devices,
said control unit is configured to

(i) set the frequency of said radio-frequency power generation unit in the one of said radio-frequency power generation devices to be the same as the frequency of said radio-frequency power generation unit in the other one of said radio-frequency power generation devices, and
(ii) set the amplification gains of said respective radio-frequency power amplification units such that the amplitude of the reflected reverse flow power in the one of said radio-frequency power generation devices is smaller than the amplitude of the pass-through reverse flow power radiated from the other one of said radio-frequency power generation devices.

6. The radio-frequency heating apparatus according to Claim 4, wherein, when said reverse flow power detection unit in one of said radio-frequency power generation devices detects the reflected reverse flow power,
said control unit is configured to set the amplification gains of the respective radio-frequency power amplification units such that the amplitude of the pass-through reverse flow power radiated from another one of said radio-frequency power generation devices is smaller than the amplitude of the reflected reverse flow power in the one of said radio-frequency power generation devices.

7. The radio-frequency heating apparatus according to any one of Claims 4 to 6,
wherein said control unit is configured to

(i) perform at least one of the following: performing, as a pre-search process, determination of the combination of frequencies to be set for said radio-frequency power generation units in said respective radio-frequency power generation devices, before a heating process for the object to be heated; and performing, as a re-search process, the determination during the heating process for the object to be heated, and
(ii) set the amplification gains of said radio-frequency power amplification units in said respective radio-frequency power generation devices during the pre-search process or the re-search process such that radio-frequency power to be radiated from said radiation unit of each of said radio-frequency power generation devices is smaller than the radio-frequency power that is radiated from said radiation unit during the heating process.

8. The radio-frequency heating apparatus according to any one of Claims 1 to 6,
wherein said control unit is configured to perform, as a pre-search process, determination of the combination of frequencies to be set for said radio-frequency power generation units in said respective radio-frequency power generation devices, before a heating process for the object to be heated.

9. The radio-frequency heating apparatus according to any one of Claims 1 to 6,
wherein said control unit is configured to

(i) perform, as a re-search process, determination of the combination of frequencies to be set for said radio-frequency power generation units in said respective radio-frequency power generation devices, during a heating process for the object to be heated, and
(ii) set said radio-frequency power generation units in said respective radio-frequency power generation devices to have a new combination of frequencies determined in the re-search process.

10. The radio-frequency heating apparatus according to Claim 9, wherein said reverse flow power detection unit is configured to detect the reverse flow power during the heating process for the object to be heated, and
said control unit is configured to perform the re-search process when the reverse flow power detected by at least one of said reverse flow power detection units in said respective radio-frequency power generation devices exceeds a predetermined threshold.

11. The radio-frequency heating apparatus according to one of Claims 1 and 2, further comprising
one or more detective power generation units configured to generate detective radio-frequency power at set frequencies,
wherein said control unit is further configured to set, for said respective detective power generation units, detective frequencies different from the frequencies that are set for said radio-frequency power generation units in said respective radio-frequency power generation devices,

said reverse flow power detection unit includes a quadrature detection unit,

said quadrature detection unit is configured to output, to said control unit, an in-phase detection signal and a quadrature detection signal obtained by performing, using the detective radio-frequency power generated by a corresponding one of said detective power generation units, quadrature detection on the reverse flow power that has entered said radiation unit, and

said control unit is configured to calculate, using the in-phase detection signal and the quadrature detection signal, the amplitude and phase of the reflected reverse flow power and the amplitude and phase of the pass-through reverse flow power.

12. The radio-frequency heating apparatus according to Claim 11, wherein each of said detective power generation units is provided in a corresponding one of said radio-frequency power generation devices.

13. A radio-frequency heating method of heating an object placed in a heating chamber using radio-frequency power radiated from a plurality of radio-frequency power generation devices, said radio-frequency heating method comprising:

setting frequencies of the radio-frequency power radiated from the respective radio-frequency power generation devices;

firstly detecting amplitude and phase of reflected reverse flow power and amplitude and phase of pass-through reverse flow power based on the frequencies that have been set for the respective radio-frequency power generation devices, the reflected reverse flow power being part of the radio-frequency power radiated from one of the radio-frequency power generation devices which is reflected back into the one of the radio-frequency power generation devices, and the pass-through reverse flow power being part of the radio-frequency power radiated from another one of the radio-frequency power generation devices which enters the one of the radio-frequency power generation devices,

changing the frequencies of the radio-frequency power radiated from the respective radio-frequency power generation devices;

secondly detecting amplitude and phase of the reflected reverse flow power and amplitude and phase of the pass-through reverse flow power based on the frequencies that have been set in said changing;

determining, based on the amplitude and phase of the reflected reverse flow power and the amplitude and phase of the pass-through reverse flow power detected in said firstly detecting and said secondly detecting, a combination of the frequencies of the radio-frequency power to be radiated from the respective radio-frequency power generation devices to heat the object; and

heating the object by radiating the radio-frequency power at the frequencies in the determined combination from the respective radio-frequency power generation devices.

14. The radio-frequency heating method according to Claim 13,

wherein said determining includes: estimating, by calculation using the amplitude and phase of the reflected reverse flow power and the amplitude and phase of the pass-through reverse flow power detected in said firstly detecting and said secondly detecting, amplitude and phase of the reflected reverse flow power and amplitude and phase of the pass-through reverse flow power for each of all the combinations of settable frequencies of the radio-frequency power radiated from the respective radio-frequency power generation devices; and

determining, from the amplitude and phase of the reflected reverse flow power and the amplitude and phase of the pass-through reverse flow power detected in said firstly detecting and said secondly detecting and the amplitude and phase of the reflected reverse flow power and the amplitude and phase of the pass-through reverse flow power estimated in said estimating, a combination of frequencies of the radio-frequency power to be radiated from the respective radio-frequency power generation devices to heat the object.

# FIG. 1

EP 2 440 014 A1

# FIG. 2

Start

Detect reflected power and through power
separately at each frequency in respective
radio-frequency power generation devices —S201

Determine combination of frequencies which
provides best radiation efficiency —S202

Set determined combination of frequencies for
respective radio-frequency power generation
devices, and execute heating process —S203

End

## FIG. 3

101a

**1st radio-frequency power generation device**

**Radio-frequency power generation unit**

301 — 〜

302 — Phase synchronization loop

303

102a

107a — Distribution unit

304 — **Radio-frequency power amplification unit**

Variable attenuator

305

103a

104a — Directional coupling unit

Radiation unit

105a

**Quadrature detection unit**

308 — $(\pi/2)$ — 307

(0)

306 — (I)

(Q)

106a

309 — LPF  LPF — 310

111a — Frequency control signal

112a — Amplification gain control signal

113a — In-phase detection signal

114a — Quadrature detection signal

Control unit — 150

EP 2 440 014 A1

# FIG. 4

Start of reflected power detection flow

S401 — Frequencies of all radio-frequency power generation devices different?

Yes →

S402 — Detect amplitude and phase of reflected power in respective radio-frequency power generation device

No →

(Radio-frequency power generation device at frequency not overlapping with another radio-frequency power generation device)

1st radio-frequency power generation device

S403 — Detect amplitude and phase of reflected power

(Radio-frequency power generation device at frequency overlapping with another radio-frequency power generation device)

1st radio-frequency power generation device : Frequency A
2nd radio-frequency power generation device : Frequency B
3rd radio-frequency power generation device : Frequency B

S404 — Reduce output power of radio-frequency power generation devices other than one radio-frequency power generation device to be detected

S405 — Detect amplitude and phase of reflected power in the one radio-frequency power generation device to be detected

S406 — Detection completed in all radio-frequency power generation devices at overlapping frequencies?

No →

S407 — Set different radio-frequency power generation device as detection subject

Yes →

End

# FIG. 5

Start of through power
detection flow

S501

Reduce output power of radio-frequency
power generation devices other than one
radio-frequency power generation device

S502

Set other radio-frequency power
generation devices at frequencies
same as one radio-frequency power
generation device

S503

Detect amplitude and frequency of
through power from one radio-
frequency power generation device to
respective radio-frequency power
generation devices

S505

Set different radio-
frequency power
generation device as
detection subject

S504

Detection completed
in all radio-frequency power
generation devices?

No

Yes

End

# FIG. 6

Start of through power
detection flow

S601

Reduce output power of one radio-
frequency power generation device

S602

Set one radio-frequency power
generation device at frequency
same as another radio-frequency
power generation device

S603

Detect amplitude and frequency of
through power from another radio-
frequency power generation device
to one radio-frequency power
generation device

S604

Detection
completed in all the
other radio-frequency power
generation
devices?

No → S605

Set one radio-frequency
power generation
device at frequency
same as another radio-
frequency power
generation device

Yes

S606

Detection
completed in all
radio-frequency power
generation
devices?

No → S607

Set different radio-
frequency power
generation device
as detection subject

Yes

End

## FIG. 7

```
        ( Start of pre-search process )
                       │
                       ▼        S701
        ┌──────────────────────────────────┐
        │ Set respective radio-frequency   │
        │ power generation devices at      │
        │ pre-search initial frequencies   │
        └──────────────────────────────────┘
                       │
                       ▼
                      ( ○ )◄──────────────────────────┐
                       │        S702                   │
        ┌──────────────────────────────────┐          │
        │ Detect amplitude and phase       │          │
        │ of reflected power in all radio- │          │
        │ frequency power generation       │          │
        │ devices                          │          │
        └──────────────────────────────────┘          │
                       │                               │
                       ▼        S703              S704 │
                  ╱──────────╲                ┌──────────────────────┐
                 ╱ Detection  ╲   No          │ Set respective radio-│
                ╱ completed at  ╲────────────►│ frequency power      │
                ╲ all frequencies╱            │ generation devices   │
                 ╲ for pre-search?╱           │ at next frequencies  │
                  ╲──────────╱                │ for pre-search       │
                    Yes │                     └──────────────────────┘
                       ▼
                      ( ○ )◄──────────────────────────┐
                       │        S705                   │
        ┌──────────────────────────────────┐          │
        │ Detect amplitude and phase of    │          │
        │ through power among all radio-   │          │
        │ frequency power generation devices│         │
        └──────────────────────────────────┘          │
                       │                               │
                       ▼        S706              S707 │
                  ╱──────────╲                ┌──────────────────────┐
                 ╱ Detection  ╲   No          │ Set respective radio-│
                ╱ completed at  ╲────────────►│ frequency power      │
                ╲ all frequencies╱            │ generation devices   │
                 ╲ for pre-search ╱           │ at next  frequencies │
                  ╲──────────╱                │ for pre-search       │
                    Yes │      S708           └──────────────────────┘
                       ▼
        ┌──────────────────────────────────┐
        │ Estimate radiation efficiency in all│
        │ combinations of settable frequencies│
        └──────────────────────────────────┘
                       │        S709
                       ▼
        ┌──────────────────────────────────┐
        │ Determine combination of frequencies│
        │ which provides best radiation efficiency│
        └──────────────────────────────────┘
                       │        S710
                       ▼
        ┌──────────────────────────────────┐
        │ Set respective radio-frequency power│
        │ generation devices at determined │
        │ combination of frequencies       │
        └──────────────────────────────────┘
                       │
                       ▼
                  (    End    )
```

# FIG. 8

| Frequencies [MHz] | S11 | S12 | S13 | S21 | S22 | ··· | S33 |
|---|---|---|---|---|---|---|---|
| 2400 | $M_{2400.11}$ $\theta_{2400.11}$ | $M_{2400.12}$ $\theta_{2400.12}$ | $M_{2400.13}$ $\theta_{2400.13}$ | $M_{2400.21}$ $\theta_{2400.21}$ | $M_{2400.22}$ $\theta_{2400.22}$ | ··· | $M_{2400.33}$ $\theta_{2400.33}$ |
| 2401 | $M_{2401.11}$ $\theta_{2401.11}$ | $M_{2401.12}$ $\theta_{2401.12}$ | $M_{2401.13}$ $\theta_{2401.13}$ | $M_{2401.21}$ $\theta_{2401.21}$ | $M_{2401.22}$ $\theta_{2401.22}$ | ··· | $M_{2401.33}$ $\theta_{2401.33}$ |
| 2402 | $M_{2402.11}$ $\theta_{2402.11}$ | $M_{2402.12}$ $\theta_{2402.12}$ | $M_{2402.13}$ $\theta_{2402.13}$ | $M_{2402.21}$ $\theta_{2402.21}$ | $M_{2402.22}$ $\theta_{2402.22}$ | ··· | $M_{2402.33}$ $\theta_{2402.33}$ |
| ⋮ | ⋮ | ⋮ | ⋮ | ⋮ | ⋮ | ··· | ⋮ |
| 2500 | $M_{2500.11}$ $\theta_{2500.11}$ | $M_{2500.12}$ $\theta_{2500.12}$ | $M_{2500.13}$ $\theta_{2500.13}$ | $M_{2500.21}$ $\theta_{2500.21}$ | $M_{2500.22}$ $\theta_{2500.22}$ | ··· | $M_{2500.33}$ $\theta_{2500.33}$ |

In each cell, first line indicates amplitude M and second line indicates phase $\theta$

EP 2 440 014 A1

# FIG. 9

## FIG. 10

```
        ( Start of re-search process )
                       │
                       ▼            ╱S801
        ┌──────────────────────────────────────┐
        │ Calculate present radiation efficiency │
        └──────────────────────────────────────┘
                       │            ╱S802
                       ▼
        ┌──────────────────────────────────────┐
        │ Set respective radio-frequency power   │
        │ generation devices at re-search        │
        │ frequencies                            │
        └──────────────────────────────────────┘
                       │
                       ▼
                       ○◄──────────────────────────────┐
                       │            ╱S803               │
        ┌──────────────────────────────────────┐        │
        │ Detect amplitude and phase             │        │
        │ of reflected power                     │        │
        └──────────────────────────────────────┘        │
                       │            ╱S804               │
                       ▼                                 │
        ┌──────────────────────────────────────┐        │
        │ Detect amplitude and phase             │        │
        │ of through power                       │        │
        └──────────────────────────────────────┘        │
                       │            ╱S805               ╱S806
                       ▼                    ┌──────────────────────────────┐
                  ╱Detection╲         No    │ Set respective radio-          │
              ╱completed at all frequencies╲──────►│ frequency power generation     │
               ╲ for re-search? ╱                 │ devices at next frequencies    │
                  ╲         ╱                      │ for re-search                  │
                   Yes │                           └──────────────────────────────┘
                       ▼            ╱S807
        ┌──────────────────────────────────────┐
        │ Estimate radiation efficiency in       │
        │ all combinations of settable           │
        │ frequencies                            │
        └──────────────────────────────────────┘
                       │            ╱S808
                       ▼
        ┌──────────────────────────────────────┐
        │ Calculate best radiation efficiency    │
        └──────────────────────────────────────┘
                       │            ╱S809
                       ▼
                 ╱Higher than╲        No
               ╱ present radiation ╲─────────────────────┐
                ╲   efficiency?   ╱                       │
                   ╲         ╱                            │
                   Yes │      ╱S810                       │     ╱S811
                       ▼                                  ▼
        ┌──────────────────────────────────┐   ┌──────────────────────────┐
        │ Set combination of frequencies    │   │ Set original combination  │
        │ which provides calculated best·   │   │ of frequencies            │
        │ radiation efficiency              │   │                           │
        └──────────────────────────────────┘   └──────────────────────────┘
                       │                              │
                       ▼                              │
                       ○◄─────────────────────────────┘
                       │
                       ▼
                  (   End   )
```

# FIG. 11

## FIG. 12

201a

1st radio-frequency power generation device

103a

Radio-frequency power generation unit

102a

Radio-frequency power amplification unit

104a

Radiation unit

301

304

Variable attenuator

Directional coupling unit

302

303

Phase synchronization loop

305

105a

Quadrature detection unit

109a

Detective power generation unit

308

(π/2)

307

311

312

(0)

306

(I)

(Q)

Phase synchronization loop

313

309

LPF

LPF

310

106a

Frequency control signal

Detective frequency control signal

115a

112a

113a

114a

In-phase detection signal

Quadrature detection signal

Amplification gain control signal

111a

Control unit

250

FIG. 13

EP 2 440 014 A1

| INTERNATIONAL SEARCH REPORT | International application No. |
|---|---|
| | PCT/JP2010/003645 |

**A. CLASSIFICATION OF SUBJECT MATTER**
*H05B6/68*(2006.01)i

According to International Patent Classification (IPC) or to both national classification and IPC

**B. FIELDS SEARCHED**

Minimum documentation searched (classification system followed by classification symbols)
H05B6/68

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-108491 A (Matsushita Electric Industrial Co., Ltd.), 08 May 2008 (08.05.2008), entire text; all drawings (Family: none) | 1-14 |
| A | JP 2006-523921 A (Rimm Technologies Corp. N.V.), 19 October 2006 (19.10.2006), entire text; all drawings & US 2007/0075072 A1 & EP 1614327 A & WO 2004/093499 A1 & DE 602004004642 D & FR 2854022 A & FR 2854022 A1 & AT 353535 T & HK 1086433 A & ES 2281796 T & PT 1614327 E | 1-14 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August, 2010 (30.08.10) | 07 September, 2010 (07.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/003645

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-32638 A (Panasonic Corp.),<br>12 February 2009 (12.02.2009),<br>entire text; all drawings<br>(Family: none) | 1-14 |
| A | WO 2009/011111 A1 (Panasonic Corp.),<br>22 January 2009 (22.01.2009),<br>entire text; all drawings<br>& EP 2182774 A        & KR 10-2010-0031520 A | 1-14 |
| P,A | JP 2009-301747 A (Panasonic Corp.),<br>24 December 2009 (24.12.2009),<br>entire text; all drawings<br>(Family: none) | 1-14 |
| P,A | JP 2010-4453 A (Panasonic Corp.),<br>07 January 2010 (07.01.2010),<br>entire text; all drawings<br>(Family: none) | 1-14 |

Form PCT/ISA/210 (continuation of second sheet) (July 2009)

**EP 2 440 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008269793 A